# EUROPÄISCHE PATENTSCHRIFT

(11) **EP 3 990 516 B1**
(45) Veröffentlichungstag und Bekanntmachung des Hinweises auf die Patenterteilung: **20.08.2025**
(21) Anmeldenummer: 20734202.3
(22) Anmeldetag: 24.06.2020
(51) Int. Cl.: C08G 18/82, C08J 11/24

(54) **VERFAHREN ZUR WIEDERGEWINNUNG VON ROHSTOFFEN AUS POLYURETHANPRODUKTEN**
METHOD FOR THE RECOVERY OF RAW MATERIALS FROM POLYURETHANE PRODUCTS
PROCÉDÉ DE RÉCUPÉRATION DE MATIÈRES PREMIÈRES À PARTIR DE PRODUITS POLYURÉTHANE

(30) Priorität: 27.06.2019 EP 19182910; 22.05.2020 EP 20176091; 19.06.2020 EP 20181175
(43) Veröffentlichungstag der Anmeldung: 04.05.2022
(73) Patentinhaber: Covestro Deutschland AG, 51373 Leverkusen (DE)
(72) Erfinder: STEFFENS, Friedhelm, 51373 Leverkusen (DE); POHL, Sebastian, 40764 Langenfeld (DE); MAJIDI SALEHI, Shabnam, 50672 Köln (DE); KRAUSE, Jonas, 40764 Langenfeld (DE)
(74) Vertreter: Levpat
(86) Internationale Anmeldenummer: PCT/EP2020/067694
(87) Internationale Veröffentlichungsnummer: WO 2020/260387

(56) Entgegenhaltungen:
- US-A- 4 336 406
- D. SIMÓN ET AL: "Recycling of polyurethanes from laboratory to industry, a journey towards the sustainability", WASTE MANAGEMENT., vol. 76, 3 April 2018 (2018-04-03), US, pages 147 - 171, XP055660082, ISSN: 0956-053X, DOI: 10.1016/j.wasman.2018.03.041

## Beschreibung

Das Projekt, das zu der vorliegenden Anmeldung führte, hat im Rahmen des *Horizon 2020 research and innovation programme* der Europäischen Union Fördermittel unter der Fördervereinbarung Nr. 814543 erhalten.

Die vorliegende Erfindung betrifft ein Verfahren zur Wiedergewinnung von Rohstoffen aus Polyurethanprodukten, umfassend die Schritte **(A)** Bereitstellen eines auf einem Isocyanat und einem Polyol basierenden Polyurethanprodukts; **(B)** Umsetzen des Polyurethanprodukts mit einem (ein- oder mehrwertigen) Alkohol in Gegenwart eines Katalysators, wobei ein erstes Produktgemisch erhalten wird; **(C)** Gewinnen von Polyolen aus dem ersten Produktgemisch, umfassend **(C.I)** Vermengen des in Schritt (B) erhaltenen ersten Produktgemisches, und zwar ohne vorherige Abtrennung gegebenenfalls in dem ersten Produktgemisch vorhandenen Wassers, mit einem organischen Lösungsmittel, das mit dem in Schritt (B) eingesetzten Alkohol nicht vollständig mischbar ist, und Phasentrennung in eine erste Alkoholphase und eine erste Lösungsmittelphase; **(C.II)** Aufarbeiten der ersten Lösungsmittelphase unter Gewinnung von Polyolen; und bevorzugt **(D)** Gewinnen von Aminen.

Polyurethanprodukte finden vielfältige Anwendungen in der Industrie und im Alltag. Üblicherweise wird zwischen Polyurethan*schäumen* und sog. "CASE"-Produkten unterschieden, wobei "CASE" ein Sammelbegriff für Polyurethan-*Beschichtungen* (z. B. Lacke), *-Klebstoffe, -Dichtstoffe* und *-Elastomere* ist. Die Polyurethanschäume werden üblicherweise in Hartschäume und Weichschäume unterteilt. All diesen Produkten ist trotz ihrer Verschiedenheit die Polyurethangrundstruktur gemeinsam, die durch die Polyadditionsreaktion eines (mehrwertigen) Isocyanats (= der Isocyanatkomponente des Polyurethanprodukts) und eines Polyols (= der Polyolkomponente des Polyurethanprodukts) entsteht und sich beispielsweise für ein Polyurethan, das auf einem Diisocyanat **O=C=N-R-N=C=O** und einem Diol H-O-R'-O-H basiert (wobei R und R' organische Reste bezeichnen) als

~~~[O-R'-O-(**O=C**)-H**N**-**R**-**N**H-(**C=O**)]~~~

darstellen lässt.

Gerade wegen des großen wirtschaftlichen Erfolges der Polyurethanprodukte fallen auch große Mengen an Polyurethanabfall (z. B. aus alten Matratzen oder Sitzmöbeln) an, der einer sinnvollen Verwendung zugeführt werden muss. Die technisch am einfachsten umzusetzende Art der Wiederverwendung ist die Verbrennung unter Nutzung der freiwerdenden Verbrennungswärme für andere Prozesse, beispielweise industrielle Herstellprozesse. Auf diese Weise ist jedoch eine Schließung der Rohstoffkreisläufe nicht möglich. Eine andere Art der Wiederverwendung ist das sog. *"physikalische* Recycling", bei welchem Polyurethanabfälle mechanisch zerkleinert und in der Herstellung neuer Produkte eingesetzt werden. Dieser Art des Recyclings sind naturgemäß Grenzen gesetzt, weshalb es nicht an Versuchen gefehlt hat, die der Polyurethanproduktion *zugrunde liegenden Rohstoffe* durch Rückspaltung der Polyurethanbindungen wiederzugewinnen (sog. *"chemisches* Recycling "). Die zurückzugewinnenden Rohstoffe umfassen dabei in erster Linie Polyole (im obigen Beispiel also H-O-R'-O-H). Daneben können durch hydrolytische Spaltung der Urethanbindung auch Amine gewonnen werden (im obigen Beispiel also H₂N-R-NH₂), die sich nach Aufarbeitung zu Isocyanaten (im obigen Beispiel zu O=C=N-R-N=C=O) phosgenieren lassen.

Verschiedene Ansätze des chemischen Recyclings wurden in der Vergangenheit entwickelt. Die drei wichtigsten werden im Folgenden kurz zusammengefasst:
1. **Hydrolyse** von Urethanen durch Umsetzung mit Wasser unter Gewinnung von Aminen und Polyolen unter Bildung von Kohlenstoffdioxid.
2. **Glykolyse** von Urethanen durch Umsetzung mit Alkoholen, wobei die Polyole, die in den Urethangruppen eingebaut sind, durch den eingesetzten Alkohol ersetzt und auf diese Weise freigesetzt werden. Dieser Vorgang wird in der Literatur meist als *Umesterung* bezeichnet (genauer: *Umurethanisierung*). Diese Art des chemischen Recyclings wird unabhängig von der genauen Art des eingesetzten Alkohols in der Literatur üblicherweise als *Glykolyse* bezeichnet, obwohl dieser Begriff eigentlich nur für Glykol zutreffend ist. Im Zusammenhang mit der vorliegenden Erfindung wird daher allgemein von *Alkoholyse* gesprochen.
3. **Hydroglykolyse** von Urethanbindungen durch Umsetzung mit Wasser *und* Alkoholen, wobei die oben beschriebenen Vorgänge der Hydrolyse und Glykolyse parallel ablaufen.

Eine Zusammenfassung der bekannten Verfahren des Polyurethanrecyclings bietet der Übersichtsartikel von Simón, Borreguero, Lucas und Rodríguez in Waste Management 2018, 76, 147 - 171 [1]. Als besonders bedeutsam wird dort die Glykolyse (Nr. 2 oben) herausgestellt. Bei der Glykolyse wird zwischen "zweiphasigen" und "einphasigen" Prozessführungen unterschieden, je nachdem, ob sich das erhaltene rohe Verfahrensprodukt der Umsetzung mit dem Alkohol in zwei Phasen trennt oder nicht. Ob dies der Fall ist, hängt insbesondere von der Wahl des eingesetzten Alkohols und den Verfahrensbedingungen ab (insbesondere Anteil des eingesetzten Alkohols an der Reaktionsmischung sowie auch Temperatur). In dem genannten Übersichtsartikel wird die zweiphasige Verfahrensführung unter Anwendung rohen Glycerins (etwa Abfälle aus der Herstellung von Biodiesel) favorisiert, da sie das höchste Potenzial habe, mit geringen Produktionskosten qualitativ hochwertige Produkte zurückzugewinnen (wobei der Fokus klar auf der Wiedergewinnung der Polyole liegt).

Infolge des zusätzlichen Einsatzes von Wasser ist das Verfahrensprodukt von Hydroglykolysen (Nr. 3 oben) stets zweiphasig. Braslaw und Gerlock beschreiben in Ind. Eng. Chem. Process Des. Dev. 1984, 23, 552 - 557 [2] die Aufarbeitung eines solchen Verfahrensproduktes umfassend die Abtrennung des Wassers (durch Phasentrennung im Labormaßstab oder Verdampfung im für großtechnische Anwendungen vorgeschlagenen sog. *"Ford-Hydroglykolyse-Prozess*") und Extraktion der verbleibenden organischen Phase mit Hexadecan unter Ausbildung einer Alkoholphase, aus welcher Amin gewonnen werden kann, und einer Hexadecan-Phase, aus welcher Polyol gewonnen werden kann. Obwohl die Möglichkeit der Wiedergewinnung von Amin erwähnt wird, liegt auch in diesem Artikel der Schwerpunkt auf der Rückgewinnung von Polyolen.

Ein Patent auf einen nach diesen Prinzipien arbeitenden Prozess wurde unter der Nummer US 4,336,406 erteilt. Dort wird ein Verfahren zur Rückgewinnung von Polyetherpolyol aus einem Polyurethan beschrieben, welches darin besteht, dass man stufenweise:
(a) durch Auflösung dieses Polyurethans in einem gesättigten Alkohol mit einem Siedepunkt von 225 °C bis 280 °C bei einer Temperatur von 185 °C bis 220 °C unter einer nichtoxydierenden Atmosphäre eine Lösung bildet;
(b) diese Lösung unter dieser nichtoxydierenden Atmosphäre in Gegenwart eines Alkalihydroxyd-Katalysators mit Wasser für die erforderliche Zeit reagieren lässt, um die hydrolysierbaren Auflösungsprodukte weitgehend zu Aminen und Alkohol zu hydrolysieren, während man diese Lösung bei einer Temperatur von 175 °C bis 220 °C hält, wobei dieser Alkalihydroxyd-Katalysator der Lösung in einer Menge im Bereich von mindestens 0,1 Massen-%, bezogen auf die Masse dieses Polyurethanschaums, zugesetzt wird;
(c) das nach der Hydrolyse verbleibende Wasser aus dieser Lösung unter einer nichtoxydierenden Atmosphäre entfernt;
(d) dieses Polyol unter einer nichtoxydierenden Atmosphäre mit einem Alkan, das mit diesem Alkohol im Wesentlichen nicht mischbar ist und einen Siedepunkt von 230 °C bis 300 °C aufweist (insbesondere Hexadecan), aus der hydrolysierten Lösung extrahiert;
   und
(e) das extrahierte Polyol einer Vakuumreinigung bei einer Temperatur unterhalb 230 °C unterzieht.

In Schritt (a) erfolgt eine Reaktion des Polyurethans mit den Alkoholgruppen des gesättigten Alkohols unter Bildung von Polyolen, Harnstoffen und Carbamaten (siehe Spalte 3, Zeilen 42 bis 46). Schritt (a) ist demnach eine Glykolyse (genauer: Alkoholyse).

In Schritt (b) wird zu der in Schritt (a) erhaltenen Lösung Wasser und Alkalihydroxyd-Katalysator gegeben, entweder getrennt oder in Form einer wässrigen Katalysatorlösung, wodurch Carbamate und Harnstoffe zu Aminen und Alkohol zersetzt werden. Schritt (b) ist demnach eine Hydrolyse, sodass die Schritte (a) und (b) in ihrer Gesamtheit als Hydroglykolyse (genauer: Hydroalkoholyse) mit zeitversetzter Zugabe von Alkohol und Wasser aufzufassen sind. Wasser wird in einer solchen Menge zugegeben, dass die Lösung bei Temperaturen zwischen 175 °C und 200 °C siedet. Im Fall von Diethylenglykol als Alkohol wird das Wasser in einer Menge zwischen 2,4 % und 0,6 %, vorzugsweise 1,1 %, der Masse des eingesetzten Diethylenglykols zugegeben (siehe Spalte 4, Zeilen 39 bis 46). In der Hydrolyse verbrauchtes Wasser wird durch Zugabe weiteren Wassers ersetzt, um den Wassergehalt konstant zu halten. Nach erfolgter Hydrolyse muss das verwendete Wasser in Schritt (c) entfernt werden (Spalte 5, Zeilen 31 bis 33), bevor die Extraktion in Schritt (e) erfolgen kann.

Nur wenige der literaturbekannten Prozesse des chemischen Recyclings werden dauerhaft im großtechnischen Maßstab betrieben; viele haben noch nicht einmal den Pilotierungsmaßstab erreicht [1]. Angesichts des allgemein gestiegenen Umweltbewusstseins und verstärkter Bestrebungen, industrielle Prozesse möglichst nachhaltig auszugestalten - was beides grundsätzlich für ein chemisches Recycling spricht - zeigt dies augenscheinlich, dass das chemische Recycling von Polyurethanprodukten unter technischen und wirtschaftlichen Gesichtspunkten noch längst nicht ausgereift ist. Herausforderungen bestehen insbesondere bezüglich der Reinheit der zurückgewonnenen Produkte. Polyole müssen möglichst ohne Aminverunreinigungen zurückgewonnen werden, um etwa beim Wiedereinsatz in der Herstellung von Polyurethanschäumen das Schaumbildungsverhalten nicht nachteilig zu beeinflussen. Ist auch eine Wiedergewinnung von Aminen angestrebt, so müssen auch diese selbstredend in möglichst hoher Reinheit gewonnen werden. Daneben enthalten die wiederzuverwertenden Polyurethanprodukte meist noch diverse Hilfs- und Zusatzstoffe (Stabilisatoren, Katalysatoren und dgl. mehr), die wirtschaftlich und umweltschonend von den eigentlichen Zielprodukten des Recyclings abgetrennt und entsorgt werden müssen. Ferner muss ein wirtschaftlich arbeitendes Recyclingverfahren sicherstellen, dass die eingesetzten Reagenzien (beispielsweise eingesetzte Alkohole) möglichst vollständig zurückgewonnen und erneut eingesetzt (also im Kreis geführt) werden können.

Es bestand also ein Bedarf an weiteren Verbesserungen auf dem Gebiet des chemischen Recyclings von Polyurethanprodukten. Insbesondere wäre es wünschenswert, Polyole und vorzugsweise auch Amine in hoher Reinheit und effizient aus Polyurethanprodukten wiedergewinnen zu können, und zwar insbesondere in einer Art und Weise, die einen großtechnischen Einsatz wirtschaftlich erstrebenswert machen würde. Weiterhin wäre es wünschenswert, einen unter wirtschaftlichen und ökologischen Gesichtspunkten akzeptablen Auslass für die in den Polyurethanprodukten vorhandenen Hilfs- und Zusatzstoffe zur Verfügung zu haben.

Diesem Bedarf Rechnung tragend ist ein Gegenstand der vorliegenden Erfindung ein **Verfahren zur Wiedergewinnung von Rohstoffen aus Polyurethanprodukten,** umfassend die Schritte:
(A) Bereitstellen eines auf einem (mehrwertigen) Isocyanat (= der Isocyanatkomponente) und einem Polyol (= der Poloylkomponente) basierenden Polyurethanprodukts;
(B) Umsetzen des Polyurethanprodukts mit einem (ein- oder mehrwertigen) Alkohol in Gegenwart eines Katalysators, wobei (unter Spaltung von Urethanbindungen) ein erstes Produktgemisch (umfassend Polyole, Carbamate und den eingesetzten Alkohol, gegebenenfalls Wasser sowie - insbesondere abhängig von der Art des in Schritt (A) bereitgestellten Polyurethanprodukts - gegebenenfalls Amine, insbesondere das zu dem Isocyanat korrespondierende Amin) erhalten wird;
(C) Aufarbeiten des ersten Produktgemisches (= Gewinnen von Polyolen (d. h. der Polyole, auf denen das Polyurethanprodukt basiert, die also dessen Polyolkomponente ausmachen, und/oder der Polyole, die gegebenenfalls in Schritt (B) aus der ursprünglichen Polyolkomponente gebildet werden) aus dem ersten Produktgemisch), umfassend:
   (C.I) Vermengen des in Schritt (B) erhaltenen ersten Produktgemisches ohne vorherige Abtrennung gegebenenfalls in dem ersten Produktgemisch vorhandenen Wassers mit einem organischen Lösungsmittel, das mit dem in Schritt (B) eingesetzten Alkohol nicht vollständig mischbar ist, und Phasentrennung in eine erste Alkoholphase (umfassend neben dem Alkohol noch Carbamate und gegebenenfalls Amine, insbesondere das zu dem Isocyanat korrespondierende Amin) und eine erste Lösungsmittelphase (umfassend Polyole);
   (C.II) Aufarbeiten der ersten Lösungsmittelphase unter Gewinnung der Polyole;
   und optional (und bevorzugt)
(D) Aufarbeiten der ersten Alkoholphase umfassend einen Schritt des Hydrolysierens der Carbamate (= Gewinnen von Aminen aus der ersten Alkoholphase, oder, in bestimmten weiter unten beschriebenen Ausführungsformen, aus einer zweiten Alkoholphase, in welche die in der ersten Alkoholphase enthaltenen Carbamate bzw. Amine überführt werden).

*Polyurethanprodukte* im Sinne der vorliegenden Erfindung sind die Polyadditionsprodukte (bisweilen, wenn auch nicht ganz korrekt, auch als Poly*kondensations*produkte bezeichnet) von mehrwertigen *Isocyanaten* (= Iscocyanatkomponente der Polyurethanherstellung) und *Polyolen* (= Polyolkomponente der Polyurethanherstellung). Polyurethanprodukte enthalten im Allgemeinen neben der oben skizzierten Polyurethangrundstruktur noch andere Strukturen, zum Beispiel Strukturen mit Harnstoffbindungen. Das Vorliegen derartiger von der reinen Polyurethangrundstruktur abweichender Strukturen neben Polyurethanstrukturen verlässt den Rahmen der vorliegenden Erfindung nicht.

In der Terminologie der vorliegenden Erfindung umfasst der Begriff *Isocyanate* alle dem Fachmann im Zusammenhang mit der Polyurethanchemie bekannten Isocyanate wie insbesondere Toluylendiisocyanat (TDI; hergestellt aus Toluylendiamin, TDA), die Di- und Polyisocyanate der Diphenylmethanreihe (MDI; hergestellt aus den Di- und Polyaminen der Diphenylmethanreihe, MDA), 1,5-Pentandiisocyanat (PDI; hergestellt aus 1,5-Pentandiamin, PDA), 1,6-Hexamethylen-diisocyanat (HDI; hergestellt aus 1,6-Hexamethylendiamin, HDA), Isophorondiisocyanat (IPDI; hergestellt aus Isophorondiamin, IPDA) und Xylylendiisocyanat (XDI; hergestellt aus Xylylendiamin, XDA). Der Ausdruck *"ein Isocyanat"* umfasst selbstverständlich auch Ausführungsformen, in denen zwei oder mehr unterschiedliche Isocyanate (z. B. Gemische aus MDI und TDI) in der Herstellung des Polyurethanprodukts eingesetzt wurden, es sei denn, etwas anderes wird ausdrücklich zum Ausdruck gebracht, etwa durch die Formulierung *"genau ein Isocyanat".* Dies gilt auch innerhalb einer *Isocyanatklasse* (gilt also z. B. auch für verschiedene MDI-Typen). Die Gesamtheit aller in der Herstellung des Polyurethanprodukts eingesetzten Isocyanate wird als *Isocyanatkomponente* (des Polyurethanprodukts) bezeichnet. Die Isocyanatkomponente umfasst mindestens ein Isocyanat. Analog wird Gesamtheit aller in der Herstellung des Polyurethanprodukts eingesetzten Poloyle als *Polyolkomponente* (des Polyurethanprodukts) bezeichnet. Die Polyolkomponente umfasst mindestens ein Polyol.

Unter *Isocyanatklassen* werden in der Terminologie der vorliegenden Erfindung Isocyanate mit der gleichen chemischen Grundstruktur verstanden, wobei Unterschiede in einem Substitutionsmuster noch nicht als Abweichung von der chemischen Grundstruktur angesehen werden. So gehören TDI und MDI zu verschiedenen Isocyanatklassen, nicht jedoch ihre jeweiligen Isomere untereinander. Beispielsweise gehören alle Isomere des TDI (von denen 2,4-TDI und 2,6-TDI die bedeutsamsten sind) zur gleichen "Isocyanatklasse TDI", ebenso wie alle Isomere der Diisocyanate der Diphenylmethanreihe (von denen 2,4'-MDI und 4,4'-MDI die bedeutsamsten sind) zur gleichen "Isocyanatklasse MDI" gehören. Auch die MDI-Typen mit drei oder mehr "Benzolkernen" werden der "Isocyanatklasse MDI" zugerechnet. Für die *Aminklassen* gilt Entsprechendes.

In der Terminologie der vorliegenden Erfindung umfasst der Begriff *Polyole* alle dem Fachmann im Zusammenhang mit der Polyurethanchemie bekannten Polyole wie insbesondere Polyetherpolyole, Polyesterpolyole, Polyetherester-Polyole und Polyethercarbonatpolyole. Der Ausdruck *"ein Polyol"* umfasst selbstverständlich auch Ausführungsformen, in denen zwei oder mehr unterschiedliche Polyole in der Herstellung des Polyurethanprodukts eingesetzt wurden. Dies gilt auch innerhalb einer Polyolklasse. Wird daher im Folgenden beispielsweise von *"einem Polyetherpolyol"* (oder *"einem Polyesterpolyol"* usw.) gesprochen, so umfasst diese Terminologie selbstverständlich auch Ausführungsformen, in denen zwei oder mehr verschiedene Polyetherpolyole (oder zwei oder mehr verschiedene Polyesterpolyole usw.) in der Herstellung des Polyurethanprodukts eingesetzt wurden.

Als *Carbamate* werden in der Terminologie der vorliegenden Erfindung die durch die Reaktion mit dem Alkohol *in Schritt (B) gebildeten* Urethane bezeichnet.

Ein *zu einem Isocyanat korrespondierendes Amin* bezeichnet dasjenige Amin, durch dessen Phosgenierung das Isocyanat gemäß *R-NH₂ + COCl₂ → R-N=C=O + 2 HCl* erhalten werden kann. Analog dazu bezeichnet eine *zu einem Amin korrespondierende Nitroverbindung* diejenige Nitroverbindung, durch deren Reduktion gemäß *R-NO₂ + 3 H₂ → R-NH₂ + 2 H₂O* das Amin erhalten werden kann.

Die erfindungsgemäße Forderung, dass das in Schritt (C.I) einzusetzende organische Lösungsmittel *mit dem in Schritt (B) eingesetzten Alkohol nicht vollständig mischbar ist* bedeutet, dass es unter den für Schritt (C.I) vorliegenden Bedingungen eine Mischungslücke derart geben muss, dass eine Phasentrennung möglich wird.

Unter dem Begriff *aus dem Polyurethanprodukt stammende Verunreinigungen* werden im Rahmen der vorliegenden Erfindung Stoffe verstanden, die nicht in einem chemischen Recycling als Polyole oder Amine wiedergewonnenen werden können, also insbesondere Hilfs- und Zusatzstoffe aus der Herstellung des Polyurethanprodukts (Stabilisatoren, Katalysatoren, Polymerpartikel und dgl. mehr).

In den beigefügten Zeichnungen zeigen:
- **FIG. 1**: eine schematische Darstellung einer Ausführungsform des erfindungsgemäßen Verfahrens.
- **FIG. 2**: eine schematische Darstellung einer weiteren Ausführungsform des erfindungsgemäßen Verfahrens;
- **FIG. 3**: eine schematische Darstellung eines Herstellprozesses eines Amins, der mit Schritt (D) kombiniert werden kann;
- **FIG. 4**: eine mögliche Ausgestaltung einer Kombination des Herstellprozesses eines Amins mit Schritt (D) und
- **FIG. 5**: eine weitere mögliche Ausgestaltung einer Kombination des Herstellprozesses eines Amins mit Schritt (D).

Es folgt zunächst eine Kurzzusammenfassung verschiedener möglicher **Ausführungsformen der Erfindung:**
In einer **ersten Ausführungsform** der Erfindung, die mit allen anderen Ausführungsformen kombiniert werden kann, umfasst Schritt (C.II) Folgendes:
(C.II.1) Waschen der ersten Lösungsmittelphase mit einer wässrigen Waschflüssigkeit und Phasentrennung in eine zweite Lösungsmittelphase (umfassend Polyole), eine Emulsionsphase (umfassend in wässriger Waschflüssigkeit emulgierte organische Bestandteile, insbesondere Polyole) und optional eine erste wässrige Phase;
(C.II.2) Aufarbeiten der zweiten Lösungsmittelphase unter Gewinnung von Polyolen.

In einer **zweiten Ausführungsform** der Erfindung, die eine besondere Ausgestaltung der ersten Ausführungsform ist, umfasst Schritt (C.II.2) eine Destillation und/oder Strippung mit einem Strippgas (wie insbesondere Stickstoff oder Wasserdampf, bevorzugt Stickstoff).

In einer **dritten Ausführungsform** der Erfindung, die eine besondere Ausgestaltung der ersten und zweiten Ausführungsform ist, umfasst Schritt (C.II) weiterhin:
(C.II.3) Vermengen der Emulsionsphase
   (C.II.3.a) mit organischem Lösungsmittel (insbesondere dem gleichen wie in Schritt (B) eingesetzt) und Phasentrennung in eine dritte Lösungsmittelphase und eine zweite wässrige Phase - **erste Variante des Schrittes (C.II.3);** oder
   (C.II.3.b) mit der ersten Alkoholphase (d. h. mit mindestens einem Teil derselben, bevorzugt mit der gesamten ersten Alkoholphase) und mit organischem Lösungsmittel (insbesondere dem gleichen wie in Schritt (B) eingesetzt) und Phasentrennung in eine dritte Lösungsmittelphase und eine zweite Alkoholphase (umfassend neben dem Alkohol noch Carbamate und gegebenenfalls Amine, insbesondere das zu dem Isocyanat korrespondierende Amin, also **zum Beispiel TDA,** wenn die Isocyanatkomponente TDI umfasst, was bevorzugt ist) - **zweite Variante des Schrittes (C.II.3);**
   und
(C.II.4) Zurückführen der dritten Lösungsmittelphase nach Schritt (C.I) oder Schritt (C.II.1).

In einer **vierten Ausführungsform** der Erfindung, die eine besondere Ausgestaltung der *ersten Variante* der dritten Ausführungsform ist, ist Schritt (D) umfasst und wird in einer **ersten Variante** durchgeführt, welche umfasst:
(D.I.a) Verdampfen einer Alkoholfraktion (gegebenenfalls zusätzlich enthaltend Additive aus dem Poylyurethanprodukt und/oder Folgeprodukte des in Schritt (B) eingesetzten Katalysators) aus der in Schritt (C.I) erhaltenen ersten Alkoholphase (optional in Verbindung mit einer dem Verdampfen vor- oder nachgeschalteten Abtrennung von in der Alkoholphase gegebenenfalls enthaltenem organischen Lösungsmittel, wobei der Begriff *"vor- oder nachgeschaltet"* auch eine solche Ausgestaltung der Lösungsmittelabtrennung umfasst, bei welcher Wasser und Lösungsmittel in eine gemeinsame Vorlage destilliert und anschließend durch Phasentrennung voneinander getrennt werden) unter Verbleib einer Carbamatphase;
(D.II.a) Hydrolysieren der Carbamatphase (optional in Gegenwart eines Katalysators) mit einer Wasserphase (insbesondere mit einer Waschwasserphase; siehe unten) unter Erhalt einer Aminphase (= eines Amin-Wasser-Gemisches; enthaltend aus dem Polyurethanprodukt stammende Verunreinigungen);
(D.III) Gewinnen eines Amins, das zu einem Isocyanat der Isocyanatkomponente korrespondiert (**zum Beispiel TDA,** wenn die Isocyanatkomponente TDI umfasst, was bevorzugt ist), aus der Aminphase (= dem Amin-Wasser-Gemisch).

In einer **fünften Ausführungsform** der Erfindung, die eine besondere Ausgestaltung der *zweiten Variante* der dritten Ausführungsform ist, ist Schritt (D) umfasst und wird in einer **zweiten Variante** durchgeführt, welche umfasst:
(D.I.b) Hydrolysieren der zweiten Alkoholphase (optional in Gegenwart eines Katalysators) mit einer Wasserphase unter Erhalt eines Amin-Wasser-Alkohol-Gemisches (enthaltend aus dem Polyurethanprodukt stammende Verunreinigungen);
(D.II.b) Verdampfen von Wasser (optional in Verbindung mit einer dem Verdampfen vor- oder nachgeschalteten Abtrennung von in dem Amin-Wasser-Alkohol-Gemisch gegebenenfalls enthaltenem organischem Lösungsmittel, wobei der Begriff "vor- oder nachgeschaltet" auch eine solche Ausgestaltung der Lösungsmittelabtrennung umfasst, bei welcher Wasser und Lösungsmittel in eine gemeinsame Vorlage destilliert und anschließend durch Phasentrennung voneinander getrennt werden) aus dem Amin-Wasser-Alkohol-Gemisch unter Erhalt eines Amin-Alkohol-Gemisches (enthaltend aus dem Polyurethanprodukt stammende Verunreinigungen) gefolgt von Verdampfen einer Alkoholfraktion (gegebenenfalls zusätzlich enthaltend Additive aus dem Poylyurethanprodukt und/oder Folgeprodukte des in Schritt (B) eingesetzten Katalysators) aus dem Amin-Alkohol-Gemisch unter Verbleib einer Aminphase (enthaltend aus dem Polyurethanprodukt stammende Verunreinigungen);
(D.III) Gewinnen eines Amins, das zu einem Isocyanat der Isocyanatkomponente korrespondiert **(zum Beispiel TDA,** wenn die Isocyanatkomponente TDI umfasst, was bevorzugt ist), aus der Aminphase.

In einer **sechsten Ausführungsform** der Erfindung, die eine besondere Ausgestaltung der vierten Ausführungsform ist, umfasst die in Schritt (D.II.a) eingesetzte Wasserphase die in Schritt (C.II.3.a) erhaltene zweite wässrige Phase (also die Waschwasserphase aus diesem Schritt).

In einer **siebten Ausführungsform** der Erfindung, die eine besondere Ausgestaltung der vierten bis sechsten Ausführungsform ist, wird in Schritt (C.II.1) die Phasentrennung unter Erhalt der ersten wässrige Phase durchgeführt, wobei die in Schritt (D.II.a) bzw. in Schritt (D.I.b) eingesetzte Wasserphase diese erste wässrige Phase umfasst.

In einer **achten Ausführungsform** der Erfindung, die eine besondere Ausgestaltung der vierten bis siebten Ausführungsform ist, wird die in Schritt (D.I.a) bzw. Schritt (D.II.b) erhaltene Alkoholfraktion (gegebenenfalls nach einer Aufreinigung) nach Schritt (B) zurückgeführt.

In einer **neunten Ausführungsform** der Erfindung, die eine besondere Ausgestaltung der vierten bis achten Ausführungsform ist, umfasst das Verfahren weiterhin den Schritt:
(E) Bereitstellen einer (nicht aus einem der Schritte (B) bis (D), sondern aus einem Verfahren zur Amin-(Neu-)Herstellung stammenden) Rohproduktfraktion eines Amins, das das gleiche Amin ist, das in Schritt (D.III) gewonnen wird (also **im zuvor bei Schritt (D.III) gewählten Beispiel: *Bereitstellen einer TDA-Rohproduktfraktion*),** wobei die Rohproduktfraktion neben diesem Amin **(im gewählten Beispiel: *neben TDA)*** (mindestens) höher als dieses Amin **(im gewählten Beispiel: *höher als TDA*)** siedende organische Verunreinigungen enthält;
wobei Schritt (D.III) umfasst:
   (D.III.1) Vermischen der Aminphase (die **im gewählten Beispiel *TDA enthält*)** mit der Rohproduktfraktion und Aufarbeiten der erhaltenen Mischung unter Erhalt des in der Rohproduktfraktion enthaltenen Amins (also **im gewählten Beispiel: *TDA*)** gemeinsam mit dem aus der Aminphase gewonnenen Amin **(im gewählten Beispiel ebenfalls *TDA*)** - in der Aufarbeitung fällt also TDA, das aus dem Polyurethanprodukt stammt, gemeinsam mit TDA, das aus der Rohproduktfraktion stammt, an).

In einer **zehnten Ausführungsform** der Erfindung, die eine besondere Ausgestaltung der neunten Ausführungsform ist, wird die Rohproduktfraktion einer Sumpffraktion einer Destillation zur Reinigung des in der Rohproduktfraktion enthaltenen Amins **(im gewählten Beispiel: *einer Destillation zur Reinigung von TDA*)** entnommen, wobei in Schritt (D.III.1) zusätzlich (d. h. neben dem in der Rohproduktfraktion enthaltenen Amin und dem aus der Aminphase gewonnenen Amin, also **im gewählten Beispiel: *neben TDA*)** ein fester Rückstand enthaltend die höher als dieses Amin **(im gewählten Beispiel: *höher als TDA*)** siedenden organischen Verunreinigungen (und die aus dem Polyurethanprodukt stammenden Verunreinigungen) erhalten wird.

In einer **elften Ausführungsform** der Erfindung, die eine andere besondere Ausgestaltung der neunten Ausführungsform ist, wird die Rohproduktfraktion dem Rohprodukt eines Verfahrens zur Herstellung des in der Rohproduktfraktion enthaltenen Amins entnommen und enthält neben den höher als dieses Amin **(im gewählten Beispiel: *höher als TDA*)** siedenden organischen Verunreinigungen noch leichter als dieses Amin **(im gewählten Beispiel: *leichter als TDA*)** siedende organische Verunreinigungen sowie Wasser und wird einer Destillation zur Abtrennung von Wasser zugeführt, in welcher eine Sumpffraktion enthaltend dieses Amin **(im gewählten Beispiel: *TDA*),** leichter als dieses Amin **(im gewählten Beispiel: *leichter als TDA*)** siedende organische Verunreinigungen und höher als dieses Amin **(im gewählten Beispiel: *höher als TDA*)** siedende organische Verunreinigungen sowie eine Kopffraktion enthaltend abgetrenntes Wasser (gegebenenfalls neben Restmengen leichter als dieses Amin **(im gewählten Beispiel also: *leichter als TDA*)** siedender organischer Verunreinigungen) erhalten werden.

In einer **zwölften Ausführungsform** der Erfindung, die eine besondere Ausgestaltung der zehnten und elften Ausführungsform ist, umfasst Schritt (E):
(E.I) Katalytische Hydrierung der zu dem in der Rohproduktfraktion enthaltenen Amin **(im gewählten Beispiel: *TDA*)** korrespondierenden Nitroverbindung **(im gewählten Beispiel: *Dinitrotoluol, DNT*),** gegebenenfalls in Gegenwart eines Lösungsmittels, unter Erhalt eines Rohprodukts enthaltend neben diesem Amin **(im gewählten Beispiel: *neben TDA*)** noch höher als dieses Amin **(im gewählten Beispiel: *höher als TDA*)** siedende organische Verunreinigungen, leichter als dieses Amin **(im gewählten Beispiel: *leichter als TDA*)** siedende organische Verunreinigungen und Wasser;
(E.II) Abtrennen von Wasser aus dem Rohprodukt unter Erhalt eines an Wasser abgereicherten Verfahrensprodukts;
(E.III) Destillation des an Wasser abgereicherten Verfahrensprodukts unter Erhalt einer Destillatfraktion des in der Rohproduktfraktion enthaltenen (also des gewünschten) Amins **(im gewählten Beispiel: *TDA*)** und einer Sumpffraktion enthaltend neben diesem Amin **(im gewählten Beispiel: *neben TDA*)** noch höher als dieses Amin **(im gewählten Beispiel: *höher als TDA*)** siedende organische Verunreinigungen.

In einer **dreizehnten Ausführungsform** der Erfindung, die mit allen anderen Ausführungsformen kombiniert werden kann, wird das Isocyanat (d. h. das Isocyanat, das die *Isocyanatkomponente* des Polyurethanprodukts bildet) ausgewählt aus der Gruppe bestehend aus Toluylendiisocyanat (TDI), den Di- und Polyisocyanaten der Diphenylmethanreihe (MDI), 1,5-Pentandiisocyanat (PDI), 1,6-Hexamethylendiisocyanat (HDI), Isophorondiisocyanat (IPDI) und Xylylendiisocyanat (XDI) und Mischungen von zwei oder mehr der vorgenannten Isocyanate. Besonders bevorzugt ist das Isocyanat, das die Isocyanatkomponente des Polyurethanprodukts bildet, TDI (ohne weitere von diesem verschiedene Isocyanate) oder eine Mischung aus TDI und MDI (ohne weitere von diesen verschiedene Isocyanate).

In einer **vierzehnten Ausführungsform** der Erfindung, die mit allen anderen Ausführungsformen kombiniert werden kann, wird in Schritt (C.I)
das organische Lösungsmittel ausgewählt aus der Gruppe bestehend aus aliphatischen Kohlenwasserstoffen (wie insbesondere Pentan, Heptan, Hexan, Oktan, Nonan, Dekan oder Dodekan), alicyclischen Kohlenwasserstoffen (wie insbesondere Cyclohexan, Methylcyclohexan, Methylcyclopentan oder Cyclopentan), aromatischen Kohlenwasserstoffen (wie insbesondere Benzol oder Toluol) und Mischungen von zwei oder mehr der vorgenannten organischen Lösungsmittel, und
der Alkohol ausgewählt aus der Gruppe bestehend aus Methanol, Ethanol, Ethylenglykol, Diethylenglykol, Propylenglykol, Dipropylenglykol, Methylglykol, Triethylenglykol, Glycerin, 2-Methyl-1,3-Propandiol und Mischungen von zwei oder mehr der vorgenannten Alkohole.

In einer **fünfzehnten Ausführungsform** der Erfindung, die eine besondere Ausgestaltung der vierzehnten Ausführungsform ist, umfasst das organische Lösungsmittel aliphatische, alicylclische und/oder aromatische Kohlenwasserstoffe und der Alkohol umfasst Ethylenglykol, Diethylenglykol, Propylenglykol, Dipropylenglykol, Methylglykol und/oder Triethylenglykol.

In einer **sechzehnten Ausführungsform** der Erfindung, die eine besondere Ausgestaltung der fünfzehnten Ausführungsform ist, umfasst (insbesondere: *ist*) das organische Lösungsmittel Nonan, Cyclohexan und/oder Toluol und der Alkohol umfasst (insbesondere: *ist*) Diethylenglykol. Besonders bevorzugt sind die Kombinationen Nonan/Diethylenglykol und Cyclohexan/Diethylenglykol.

In einer **siebzehnten Ausführungsform** der Erfindung, die mit allen anderen Ausführungsformen kombiniert werden kann, wird der Katalysator in Schritt (B) ausgewählt aus der Gruppe bestehend aus Alkalimetall-Hydroxiden, Erdalkalimetallhydroxiden, Alkalimetallsalzen von Carbonsäuren (insbesondere Acetaten), Erdalkalimetallsalzen von Carbonsäuren (insbesondere Acetaten), Lewis-Säuren (wie insbesondere Dibutylzinndilaurat), organischen Aminen (wie insbesondere Diethanolamin), organometallischen Verbindungen (wie insbesondere Titantetrabutanolat) und Zinnverbindungen (wie insbesondere Zinnoctoat).

In einer **achtzehnten Ausführungsform** der Erfindung, die mit allen anderen Ausführungsformen, sofern diese nicht auf andere Polyurethanprodukte als Polyurethanschäume beschränkt sind, kombiniert werden kann, ist das Polyurethanprodukt ein Polyurethanschaum.

In einer **neunzehnten Ausführungsform** der Erfindung, die eine besondere Ausgestaltung der achtzehnten Ausführungsform ist, ist der Polyurethanschaum ein Polyurethanweichschaum.

In einer **zwanzigsten Ausführungsform** der Erfindung, die eine andere besondere Ausgestaltung der achtzehnten Ausführungsform ist, ist der Polyurethanschaum ein Polyurethanhartschaum.

In einer **einundzwanzigsten Ausführungsform** der Erfindung, die mit allen anderen Ausführungsformen, sofern diese nicht auf andere Polyurethanprodukte als Polyurethanelastomere beschränkt sind, kombiniert werden kann, ist das Polyurethanprodukt ein Polyurethanelastomer.

In einer **zweiundzwanzigsten Ausführungsform** der Erfindung, die mit allen anderen Ausführungsformen, sofern diese nicht auf andere Polyurethanprodukte als Polyurethanklebstoffe beschränkt sind, kombiniert werden kann, ist das Polyurethanprodukt ein Polyurethanklebstoff.

In einer **dreiundzwanzigsten Ausführungsform** der Erfindung, die mit allen anderen Ausführungsformen, sofern diese nicht auf andere Polyurethanprodukte als Polyurethanbeschichtungen beschränkt sind, kombiniert werden kann, ist das Polyurethanprodukt eine Polyurethanbeschichtung.

In einer **vierundzwanzigsten Ausführungsform** der Erfindung, die mit allen anderen Ausführungsformen, kombiniert werden kann, sofern diese den Schritt (D.II.a) oder den Schritt (D.I.b) (den Schritt der Hydrolyse der Carbamate) beinhalten, wird in Schritt (D.II.a) bzw. Schritt (D.I.b) ein Katalysator eingesetzt, der ausgewählt wird aus der Gruppe bestehend aus Alkalimetall-Hydroxiden, Erdalkalimetallhydroxiden, Alkalimetallsalzen von Carbonsäuren (insbesondere Acetaten), Erdalkalimetallsalzen von Carbonsäuren (insbesondere Acetaten), Lewis-Säuren (wie insbesondere Dibutylzinndilaurat), organischen Aminen (wie insbesondere Diethanolamin), organometallischen Verbindungen (wie insbesondere Titantetrabutanolat) und Zinnverbindungen (wie insbesondere Zinnoctoat).

In einer **fünfundzwanzigsten Ausführungsform** der Erfindung, die mit allen anderen Ausführungsformen kombiniert werden kann, wird Wasser in Schritt (B) allenfalls in einer solchen Menge zugeführt, dass der Massenanteil an Wasser, bezogen auf die Gesamtmasse aus in Schritt (B) vorhandenem (d. h. unmittelbar nach Vermischen der Reaktanden, also vor Beginn der Urethanspaltungsreaktionen, vorhandenem) Polyurethanprodukt, Katalysator, Alkohol und Wasser, in einem Bereich von 0 % bis 5,0 %, bevorzugt in einem Bereich von 0 % bis 3,0 %, besonders bevorzugt in einem Bereich von 0 % bis 2,0 %, ganz besonders bevorzugt in einem Bereich von 0 % bis 1,6 % liegt, wobei während der Umsetzung des Polyurethanprodukts mit dem (ein- oder mehrwertigen) Alkohol in Gegenwart des Katalysators kein weiteres Wasser zugegeben wird.

In einer **sechsundzwanzigsten Ausführungsform** der Erfindung, die mit allen anderen Ausführungsformen kombiniert werden kann, wird das Umsetzen des Polyurethanprodukts mit dem (ein- oder mehrwertigen) Alkohol in Gegenwart des Katalysators in Schritt (B) bei einer Temperatur im Bereich von 160 °C bis 240 °C durchgeführt.

In einer **siebenundzwanzigsten Ausführungsform** der Erfindung, die mit allen anderen Ausführungsformen kombiniert werden kann, ist das Polyol (d. h. das Polyol, das die Polyolkomponente des Polyurethanprodukts bildet), ausgewählt aus der Gruppe bestehend aus einem Polyetherpolyol, einem Polyesterpolyol, einem Polyetherester-Polyol, einem Polyethercarbonatpolyol und einer Mischung von zwei oder mehr der vorgenannten Polyole. Bevorzugt umfasst das Polyol, das die Polyolkomponente des Polyurethanprodukts bildet, ein Polyetherpolyol, besonders bevorzugt ist das Polyol ein Polyetherpolyol (ohne weitere von Polyetherpolyolen verschiedene Polyole; wobei jedoch eine Mischung von zwei oder mehr *unterschiedlichen* Polyetherpolyolen umfasst ist und den Rahmen dieser Ausführungsform nicht verlässt).

Die zuvor kurz geschilderten Ausführungsformen und weitere mögliche Ausgestaltungen der Erfindung werden im Folgenden näher erläutert. Verschiedene Ausführungsformen sind, sofern sich aus dem Kontext für den Fachmann nicht eindeutig das Gegenteil ergibt, beliebig miteinander kombinierbar.

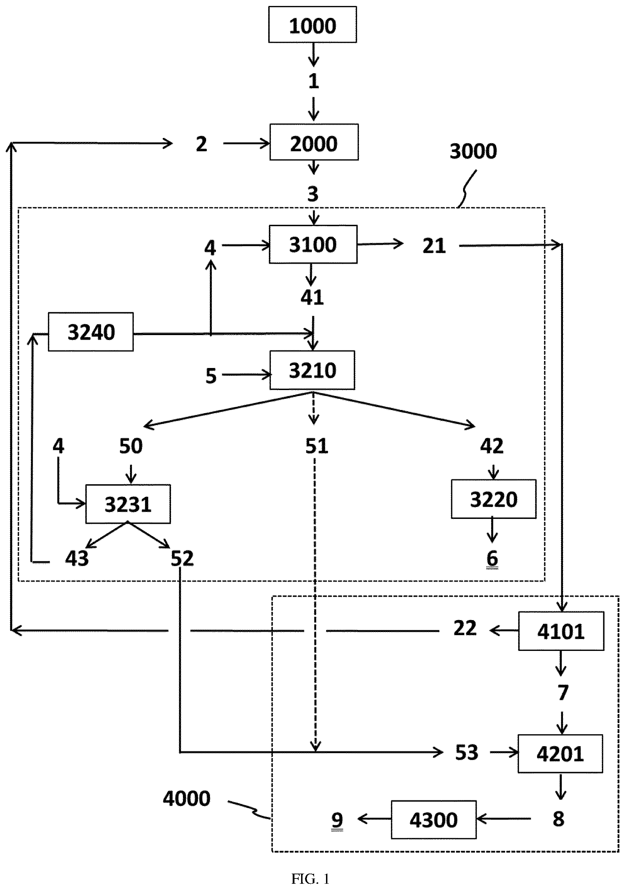

**FIG. 1** zeigt eine schematische Darstellung des erfindungsgemäßen Verfahrens umfassend die vorstehend geschilderten bevorzugten Ausführungsformen und Rückführströme gemäß Variante a in Form eines einfachen Blockfließbildes. Es bedeuten:
**1:** Polyurethanprodukt;
**2:** Alkohol; **21:** erste Alkoholphase; **22:** Alkoholfraktion;
**3:** erstes Produktgemisch
**4:** organisches Lösungsmittel; **41:** erste Lösungsmittelphase; **42:** zweite Lösungsmittelphase; **43:** dritte Lösungsmittelphase;
**5:** wässrige Waschflüssigkeit; **50:** Emulsionsphase; **51:** erste wässrige Phase; **52:** zweite wässrige Phase; **53:** Wasserphase;
**6:** Polyol;
**7:** Carbamatphase;
**8:** Aminphase;
**9:** Amin;
**1000** Schritt (A);
**2000:** Schritt (B) (als Alkoholyse);
**3000:** Schritt (C); **3100:** Schritt (C.I); **3210:** Schritt (C.II.1); **3220:** Schritt (C.II.2); **3231:** Schritt (C.II.3.a); **3240**: Schritt (C.II.4);
**4000:** Schritt (D); **4101:** Schritt (D.I.a); **4201:** Schritt (D.II.a); **4300:** Schritt (D.III).

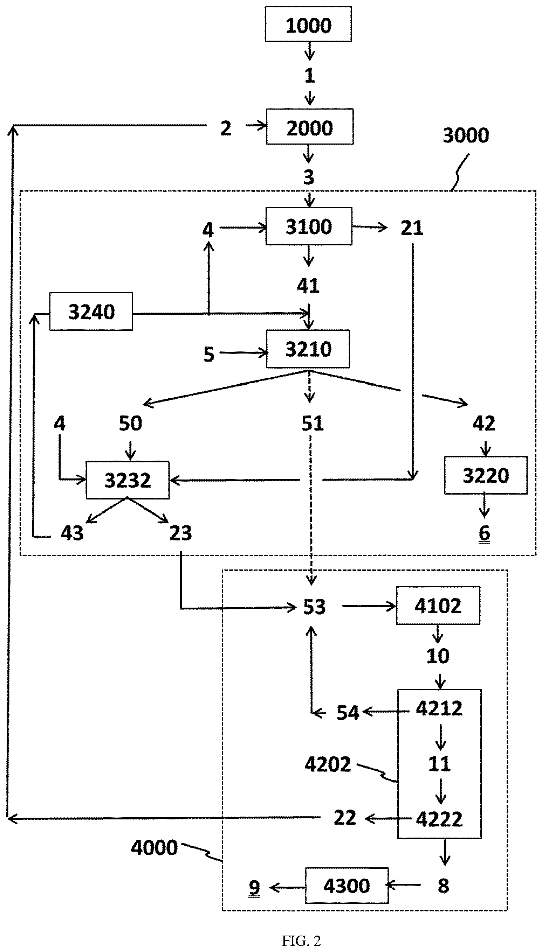

**FIG. 2** zeigt eine schematische Darstellung des erfindungsgemäßen Verfahrens umfassend die vorstehend geschilderten bevorzugten Ausführungsformen und Rückführströme gemäß Variante b in Form eines einfachen Blockfließbildes. Die verwendeten Bezugszeichen haben die gleiche Bedeutung wie bei FIG. 1. Zusätzlich bedeuten:
**10:** Amin-Wasser-Alkohol-Gemisch;
**11:** Amin-Alkohol-Gemisch;
**23:** zweite Alkoholphase;
**54:** verdampftes Wasser;
**3232:** Schritt (C.II.3.b);
**4102:** Schritt (D.I.b); **4202**: Schritt (D.II.b); **4212:** erster Teilschritt (Verdampfen von Wasser) von Schritt (D.II.b); **4222:** zweiter Teilschritt (Verdampfen einer Alkoholfraktion) von Schritt (D.II.b).

Die erste wässrige Phase wird nicht in jedem Fall erhalten bzw. wird nicht in jedem Fall als eigene Fraktion erhalten; daher werden im Zusammenhang mit derselben gestrichelte Pfeile verwendet.

### VORBEREITUNG DES CHEMISCHEN RECYCLINGS

In **Schritt (A)** des erfindungsgemäßen Verfahrens (= **1000** in den Abbildungen) wird das chemisch zu recycelnde Polyurethanprodukt (1) bereitgestellt.

Dabei kann es sich grundsätzlich um jede Art von Polyurethanprodukt handeln, d. h. sowohl um Polyurethanschäume als auch um Polyurethanprodukte aus den sog. CASE-Anwendungen. Bei den Polyurethanschäumen kommen sowohl Weichschäume als auch Hartschäume in Frage, wobei Weichschäume (beispielsweise aus alten Matratzen, Polstermöbeln oder Autositzen) bevorzugt sind. Bei Polyurethanprodukten aus den CASE-Anwendungen sind Polyurethanelastomere, Polyurethanklebstoffe und Polyurethanbeschichtungen bevorzugt. Von allen Polyurethanprodukten sind Polyurethan-Weichschäume besonders bevorzugt.

Weiterhin sind solche Polyurethanprodukte bevorzugt, die hinsichtlich der Isocyanatkomponente auf einem Isocyanat ausgewählt aus der Gruppe bestehend aus Toluylendiisocyanat (TDI), den Di- und Polyisocyanaten der Diphenylmethanreihe (MDI), 1,5-Pentandiisocyanat (PDI), 1,6-Hexamethylendiisocyanat (HDI), Isophorondiisocyanat (IPDI) und Xylylendiisocyanat (XDI) und Mischungen von zwei oder mehr der vorgenannten Isocyanate basieren. Besonders bevorzugt sind Polyurethanprodukte, die hinsichtlich der Isocyanatkomponente auf TDI oder einer Mischung aus TDI und MDI basieren. Ganz besonders bevorzugt sind Polyurethanprodukte, die hinsichtlich der Isocyanatkomponente nur auf TDI basieren.

Weiterhin sind solche Polyurethanprodukte bevorzugt, die hinsichtlich der Polyolkomponente auf einem Polyol ausgewählt aus der Gruppe bestehend aus einem Polyetherpolyol, einem Polyesterpolyol, einem Polyetherester-Polyol, einem Polyethercarbonatpolyol und einer Mischung von zwei oder mehr der vorgenannten Polyole basieren. Begriffe wie "ein Polyetherpolyol", "ein Polyesterpolyol" usw. umfassend selbstredend auch Ausführungsformen, in denen mehrere verschiedene Polyetherpoylole, Polyesterpoylole usw. eingesetzt werden. Besonders bevorzugt sind Polyurethanprodukte, die hinsichtlich der Polyolkomponente auf einem Polyetherpolyol basieren.

Insgesamt betrachtet sind daher für das erfindungsgemäße Verfahren Polyurethan-Weichschäume die auf TDI oder auf einer Mischung aus TDI und MDI als Isocyanatkomponente und auf einem Polyetherpolyol als Polyolkomponente basieren zu bevorzugen.

Bevorzugt umfasst Schritt (A) vorbereitende Schritte für die Spaltung der Urethanbindungen in Schritt (B). Dabei handelt es sich insbesondere um ein mechanisches Zerkleinern der Polyurethanprodukte. Solche vorbereitenden Schritte sind dem Fachmann bekannt; es sei beispielsweise auf die in [1] zitierte Literatur verwiesen.

### CHEMISCHE SPALTUNG DER URETHANBINDUNGEN

**Schritt (B)** des erfindungsgemäßen Verfahrens (= **2000** in den Abbildungen) betrifft die Spaltung der Urethanbindungen. Schritt (B) wird bevorzugt als *Alkoholyse* (in der Literatur meist als *Glykolyse* bezeichnet; vgl. Nr. 2 weiter oben), insbesondere bei einer Temperatur im Bereich von 160 °C bis 240 °C, durchgeführt, also als Umsetzung mit einem Alkohol ohne die Zugabe signifikanter Anteile von Wasser, im Unterschied zu dem in der Literatur als *Hydroglykolyse* bezeichneten Prozess. *Ohne die Zugabe signifikanter Anteile von Wasser* bedeutet in diesem Zusammenhang, dass nicht bewusst Wasser in solchen Mengen zugegeben wird, die in signifikantem Umfang eine Hydroglykolyse (genauer: *Hydroalkoholyse*) bewirken würden. Der Eintrag geringer Mengen Wassers, die etwa in dem in Schritt (B) eingesetzten Alkohol (2) gelöst enthalten sein, über das Polyurethanprodukt eingetragen werden oder als Lösungsmittel des Katalysators eingesetzt werden können, ist hierdurch nicht ausgeschlossen. Daher kann das erste Produktgemisch auch bei Durchführung von Schritt (B) als Alkoholyse Wasser enthalten. Es ist ebenfalls denkbar, in Schritt (B) vor Beginn der Umsetzung des Polyurethanprodukts mit dem Alkohol in Gegenwart des Katalysators geringe Mengen an Wasser zuzugeben, um eventuell ausgefallene Salze in Lösung zu bringen. Hierbei kann es bevorzugt sein, dass zuzusetzende Wasser mit Kohlenstoffdioxid zu versetzen und insbesondere zu sättigen. Hierdurch wird das Auflösen basischer Salze erleichtert. Wasser wird über die zuvor genannten Quellen allenfalls in einer solchen Menge in Schritt (B) eingetragen, dass der Massenanteil an Wasser, bezogen auf die Gesamtmasse aus in Schritt (B) vorhandenem (d. h. unmittelbar nach Vermischen der Reaktanden, also vor Beginn der Urethanspaltungsreaktionen, vorhandenem) Polyurethanprodukt, Katalysator, Alkohol und Wasser (gleich welcher Herkunft), in einem Bereich von 0 % bis 5,0 %, bevorzugt in einem Bereich von 0 % bis 3,0 %, besonders bevorzugt in einem Bereich von 0 % bis 2,0 %, ganz besonders bevorzugt in einem Bereich von 0 % bis 1,6 %, liegt. Diese Anteile sind, insbesondere da im erfindungsgemäßen Verfahren Wasser, welches durch Urethanspaltungsreaktionen chemisch verbraucht wird, *nicht durch Zugabe weiteren Wassers während der Reaktion ersetzt wird,* erheblich geringer als üblicherweise für Hydroalkoholysen eingesetzt, sodass die in Schritt (B) ablaufende Umsetzung selbst bei anfänglichem Vorhandensein geringer Mengen Wassers schon sehr bald als "reine Alkoholyse" abläuft.

Die Zugabe von Wasser *zum Zwecke des Auflösens von Salzen* kann auch *nach* erfolgter Alkoholyse im erkalteten Zustand (insbesondere nach Abkühlen auf Umgebungstemperatur) erfolgen. *In diesem Fall* können die hierfür eingesetzten Massenanteile an Wasser auch höher sein als zuvor beschrieben und insbesondere bis zu 20 %, bezogen auf die Gesamtmasse der Reaktionsmischung vor dieser Wasserzugabe nach erfolgter Alkoholyse im erkalteten Zustand, betragen. Auch hier kann es bevorzugt sein, dass zuzusetzende Wasser mit Kohlenstoffdioxid zu versetzen und insbesondere zu sättigen, um das Auflösen basischer Salze zu erleichtern.

Diese Alkoholyse liefert ein **erstes Produktgemisch (3),** das Polyole, Carbamate und den eingesetzten Alkohol (der Alkohol wird in Schritt (B) grundsätzlich überstöchiometrisch eingesetzt, sodass das erste Produktgemisch stets Anteile an nicht umgesetztem Alkohol enthält), gegebenenfalls Wasser (siehe die obigen Erläuterungen) sowie - insbesondere abhängig von der Art des in Schritt (A) bereitgestellten Polyurethanprodukts - gegebenenfalls Amine, insbesondere das zu einem Isocyanat der Isocyanatkomponente korrespondierende Amin, umfasst. Bei der Reaktion der Urethanbindungen eines wiederzuverwertenden Polyurethanprodukts mit dem in Schritt (B) eingesetzten Alkohol werden die in den Urethanbindungen gebundenen Polyole freigesetzt, und es wird ein neues Urethan mit dem eingesetzten Alkohol gebildet. Für dieses neue Urethan wird im Rahmen der vorliegenden Erfindung zur besseren Unterscheidung vom ursprünglichen Urethan der Begriff *Carbamat* verwendet. Bei mehrwertigen Alkoholen können prinzipiell alle Alkoholgruppen solche Carbamat-Bildungsreaktionen eingehen.

Es ist möglich, dass das erste Produktgemisch bereits Amine enthält. Dies ist insbesondere dann der Fall, wenn das in Schritt (A) bereitgestellte Polyurethanprodukt in signifikanter Menge Harnstoffe enthält (entstanden beispielsweise durch eine wassergetriebene Verschäumung). Solche Harnstoffe reagieren dann mit dem in Schritt (B) eingesetzten Alkohol unter Freisetzung von Aminen.

Die Alkoholyse kann grundsätzlich durchgeführt werden wie im Stand der Technik an sich bekannt.

Als Alkohole (2) für den Schritt (B) eignen sich insbesondere Methanol, Ethanol, Ethylenglykol, Diethylenglykol, Propylenglykol, Dipropylenglykol, Methylglykol, Triethylenglykol, Glycerin, 2-Methyl-1,3-Propandiol oder Mischungen von zwei oder mehr der vorgenannten Alkohole. Dabei sind Ethylenglykol, Diethylenglykol, Propylenglykol, Dipropylenglykol, Methylglykol, Triethylenglykol oder Mischungen von zwei oder mehr derselben besonders bevorzugt. Ganz besonders bevorzugt ist Diethylenglykol.

Als Katalysator für Schritt (B) eignen sich insbesondere Alkalimetall-Hydroxide, Erdalkalimetallhydroxide, Alkalimetallsalze von Carbonsäuren (insbesondere Acetate), Erdalkalimetallsalze von Carbonsäure (insbesondere Acetate), Lewis-Säuren (wie insbesondere Dibutylzinndilaurat), organischen Amine (wie insbesondere Diethanolamin), organometallische Verbindungen (wie insbesondere Titantetrabutanolat) und Zinnverbindungen (wie insbesondere Zinnoctoat). Schritt (B) wird bevorzugt bei Temperaturen im Bereich von 160 °C bis 270 °C in Gegenwart von 0,1 Massen-% bis 5 Massen-prozent Katalysator, bezogen auf die Masse des zugegebenen Polyurethanprodukts.

Das auf diese Weise erhaltene *erste Produktgemisch (**3**)* kann einphasig sein (und ist es bevorzugt auch). Es ist ein großer Vorteil der vorliegenden Erfindung, dass die Aufarbeitung zur Isolierung der Produkte der chemischen Spaltung der Urethanbindungen, also mindestens der Polyole (vgl. *Schritt (C)*), bevorzugt der Polyole und Amine (vgl. *Schritt (D)*), nicht darauf basiert, bereits in Schritt (B) eine Vortrennung des Produktgemisches zu erzielen, wie das bei vielen Verfahren des Standes der Technik, die ein zweiphasiges Produkt anstreben (siehe [1] und die darin zitierte Literatur), der Fall ist. Hierdurch werden die Freiheitsgrade bei der Wahl des Alkohols deutlich erhöht. Eine Mehrphasigkeit des ersten Produktgemisches stört aber auch nicht und verlässt den Rahmen der Erfindung nicht.

### GEWINNUNG VON POLYOLEN

**Schritt (C)** des erfindungsgemäßen Verfahrens (= **3000** in den Abbildungen) umfasst die Gewinnung von Polyolen *aus dem in Schritt (B) erhaltenen ersten Produktgemisch,* d. h. eine Abtrennung von Wasser zwischen den Schritten (B) und (C) wie im sog. *"Ford-Hydroglykolyse-Prozess"* des Standes der Technik unterbleibt. Zu diesem Zweck wird in einem ersten Schritt (C.I) **(= 3100** in den Abbildungen) das in Schritt (B) erhaltene erste Produktgemisch **(3)** mit einem organischen Lösungsmittel **(4),** das mit dem in Schritt (B) eingesetzten Alkohol **(2)** nicht vollständig mischbar ist, vermengt, sodass sich zwei Phasen ausbilden (= *Extraktion* des ersten Produktgemisches **(3)** mit dem organischen Lösungsmittel **(4)).**

Als organische Lösungsmittel **(4)** für den Schritt (C.I) eignen sich insbesondere aliphatische Kohlenwasserstoffe (wie insbesondere Pentan, Heptan, Hexan, Oktan, Nonan, Dekan oder Dodekan), alicyclische Kohlenwasserstoffe (wie insbesondere Cyclohexan, Methylcyclohexan, Methylcyclopentan oder Cyclopentan), aromatische Kohlenwasserstoffe (wie insbesondere Benzol oder Toluol) oder Mischungen von zwei oder mehr der vorgenannten organischen Lösungsmittel. Aus der vorgenannten Aufzählung ist von den aliphatischen Kohlenwasserstoffen Nonan, von den alicyclischen Kohlenwasserstoffen Cyclohexan und von den aromatischen Kohlenwasserstoffen Toluol bevorzugt.

Der in Schritt (B) eingesetzte Alkohol **(2)** und das in Schritt (C.I) eingesetzte organische Lösungsmittel **(4)** sind in jedem Fall so aufeinander abzustimmen, dass in Schritt (C.I) eine Phasentrennung in eine *erste Alkoholphase (**21**)* (umfassend neben dem eingesetzten Alkohol **(2)** die Carbamate und gegebenenfalls Amine, insbesondere das zu einem Isocyanat der Isocyanatkomponente korrespondierende Amin) und eine *erste Lösungsmittelphase (**41**)* (umfassend Polyole) durchgeführt werden kann. Zu diesem Zweck ist es bevorzugt, als organisches Lösungsmittel **(4)** einen aromatischen Kohlenwasserstoff und als Alkohol Ethylenglykol, Diethylenglykol, Propylenglykol, Dipropylenglykol, Methylglykol und/oder Triethylenglykol einzusetzen. Insbesondere bewährt haben sich die Kombinationen von Nonan und Diethylenglykol, von Cyclohexan und Diethylenglykol sowie von Toluol und Diethylenglykol, wobei die beiden erstgenannten Kombinationen besonders bevorzugt sind. Im Zweifelsfall lassen sich geeignete Kombinationen von Alkohol und Lösungsmittel durch einfache Vorversuche rasch ermitteln.

Schritt (C.I) kann mit dem Fachmann an sich bekannten Extraktionseinrichtungen wie insbesondere statischen Abscheidern mit und ohne Einbauten aber auch Zentrifugalabscheidern durchgeführt werden. Mengenverhältnisse im Bereich von 1 : 2 bis 4: 1, bezogen auf das Verhältnis des organischen Lösungsmittels zu erstem Produktgemisch sind dabei bevorzugt. Temperaturen von 20 °C bis 80 °C, bevorzugt höchstens 10 K unterhalb des Siedepunktes des eingesetzten Lösungsmittels, ggf. leichter Überdruck durch Überschleierung mit Stickstoff und Verhinderung der Gasbildung; Kreuzstromextraktion und insbesondere Gegenstromextraktion zur Reduktion der Gesamtwassermenge sind als Verfahrensbedingungen geeignet.

Die nach Phasentrennung erhaltene erste Lösungsmittelphase **(41)** wird in Schritt (C.II) unter Gewinnung von Polyolen **(6)** aufgearbeitet. Diese Aufarbeitung umfasst bevorzugt eine (ein- oder mehrstufige) Wäsche der ersten Lösungsmittelphase **(41)** mit einer wässrigen Waschflüssigkeit **(5)** in einem *Schritt (C.II.1) (= **3210**).* Dabei werden nach Phasentrennung eine zweite Lösungsmittelphase **(42;** umfassend Polyole), eine "Emulsionsphase" (**50**; umfassend in wässriger Waschflüssigkeit emulgierte organische Bestandteile, insbesondere Polyole) und optional eine erste wässrige Phase **(51)** erhalten. Es hat sich nämlich gezeigt, dass im Rahmen dieser Wäsche in der Phasentrennung neben einer organischen Phase (der zweiten Lösungsmittelphase **42)** regelmäßig eine Phase aus wässriger Waschflüssigkeit mit darin emulgierten organischen Bestandteilen gebildet wird, ja sogar unter Umständen gar keine (klare) wässrige Phase erhalten wird. Wird eine (klare) wässrige Phase erhalten, so kann diese entweder gemeinsam mit den Emulsionsbestandteilen abgetrennt werden (wobei dann in der Terminologie der vorliegenden Erfindung **die Gesamtheit** aus Emulsionsbestandteilen und klaren Bestandteilen als *Emulsionsphase* bezeichnet wird) oder man trennt das erhaltene Gemisch in *drei* Phasen, nämlich in eine zweite Lösungsmittelphase, eine Emulsionsphase (welche in diesem Fall keine klaren Bestandteile umfasst) und eine erste wässrige Phase (welche die klaren Bestandteile umfasst). Im ersten Fall liegen nach Phasentrennung also zwei Fraktionen, im zweiten Fall drei Fraktionen vor.

Bei *mehrstufiger* Wäsche in Schritt (C.II.1) erfolgt eine Phasentrennung nach jeder Waschstufe, sodass gegebenenfalls zunächst *mehrere* "erste wässrige Phasen" (= klare wässrige Phasen) erhalten werden. Eine mehrstufige Wäsche in Schritt (C.II.1) kann nach dem Fachmann bekannten Prinzipien durchgeführt werden, beispielsweise als Kreuzstromextraktion (auch als Querstromextraktion bezeichnet) und/oder Gegenstromextraktion, insbesondere als Gegenstromextraktion. Die in jeder Waschstufe erhaltenen Fraktionen von Emulsionsphase werden vereinigt. Eine in der zweiten oder einer weiteren Waschstufe erhaltene (klare) wässrige Phase wird im Falle der Gegenstromextraktion bevorzugt als wässrige Waschflüssigkeit in der jeweils vorangehenden Waschstufe eingesetzt, während eine in der ersten Waschstufe erhaltene (klare) wässrige Phase bevorzugt den Emulsionsphasen zugeschlagen und mit diesen gemeinsam dem weiter oben bereits kurz beschriebenen Schritt (C.II.3) (gleich in welcher Variante dieser Schritt durchgeführt wird) zugeführt wird. Im Falle der Kreuzstromextraktion kann mit allen erhaltenen (klaren) wässrigen Phasen so verfahren werden, d. h. sie können den Emulsionsphasen zugeschlagen und mit diesen gemeinsam dem Schritt (C.II.3) zugeführt werden.

Die so erhaltene zweite Lösungsmittelphase **(42)** wird in *Schritt (C.II.2) (= **3220)*** unter Gewinnung von Polyolen aufgearbeitet, was vorzugsweise mittels Destillation und/oder Strippung mit einem Strippgas (wie insbesondere Stickstoff oder Wasserdampf, bevorzugt Stickstoff) erfolgt. In einer Ausführungsform umfasst dieser Schritt eine Destillation in einem Verdampfer ausgewählt aus der Gruppe bestehend aus Fallfilmverdampfern, Dünnschichtverdampfern, Flashverdampfern, Steigfilmverdampfern, Naturumlauf¬verdampfern, Zwangsumlaufverdampfern und Kesselverdampfern. Einer solchen Destillation ist bevorzugt eine Strippung mit Wasserdampf nachgeschaltet.

Die in Schritt (C.II.1) erhaltene Emulsionsphase (unabhängig davon, ob diese als reine Emulsionsphase oder als Mischung aus Emulsionsbestandteilen und klarer wässriger Phase vorliegt) enthält Polyole und wird daher vorzugsweise weiter aufgearbeitet. Zu diesem Zweck hat es sich bewährt, die Emulsionsphase in einem *Schritt (C.II.3)* mit einem organischem Lösungsmittel (insbesondere dem gleichen Lösungsmittel wie in Schritt (B) eingesetzt) zu vermengen und anschließend die Phasen zu trennen (= *Extraktion* der Emulsionsphase mit organischem Lösungsmittel zur Brechung der Emulsion). Zur Durchführung dieses Schrittes (C.II.3) gibt es mehrere Möglichkeiten:
In einer **ersten Variante (Variante a; 3231;** vgl. **FIG 1****)** wird zur Emulsionsbrechung wie zuvor beschrieben (nur) das organische Lösungsmittel **(4)** eingesetzt. Nach Phasentrennung werden eine dritte Lösungsmittelphase **(43)** und eine zweite wässrige Phase **(52)** erhalten. Die dritte Lösungsmittelphase **(43)** kann in einem *Schritt (C.II.4) (= **3240**)* in den Schritt (C.I) (**3100;** Einsatz als Extraktionslösungsmittel) oder Schritt (C.II.1) (**3210;** Vereinigung mit der zu waschenden ersten Lösungsmittelphase) zurückgeführt werden.

In einer **zweiten Variante (Variante b; 3232;** vgl. **FIG 1****)** wird zur Emulsionsbrechung neben dem organischen Lösungsmittel zusätzlich noch die in Schritt (C.I) erhaltene erste Alkoholphase **21** (teilweise oder vollständig, bevorzugt vollständig) eingesetzt. Nach Phasentrennung werden eine dritte Lösungsmittelphase **(43)** und eine *zweite Alkoholphase (**22**),* welche nun die Carbamate bzw. Amine aus der ersten Alkoholphase enthält, erhalten.

### GEWINNUNG VON AMINEN

Bevorzugt umfasst die Erfindung auch den **Schritt (D)** (= **4000** in den Abbildungen), die Gewinnung von Aminen umfassend einen Schritt der Hydrolyse der in Schritt (B) gebildeten Carbamate.

Diese erfolgt in der ersten Variante (Variante a; vgl. auch **FIG. 1****)** vorzugsweise, in dem zunächst in einem Schritt (D.I.a) (= **4101** in FIG. 1) aus der in Schritt (C.I) erhaltenen ersten Alkoholphase **(21)** eine Alkoholfraktion **(22)** verdampft wird, wobei dieses Alkoholfraktion **(22)** gegebenenfalls zusätzlich Additive aus dem Poylyurethanprodukt und/oder Folgeprodukte des in Schritt (B) eingesetzten Katalysators enthält. Diese Verdampfung kann in Verbindung mit einer dem Verdampfen vor- oder nachgeschalteten Abtrennung von in der Alkoholphase enthaltenem organischem Lösungsmittel erfolgen, wobei der Begriff "vor- oder nachgeschaltet" auch eine solche Ausgestaltung der Lösungsmittelabtrennung umfasst, bei welcher Wasser und Lösungsmittel in eine gemeinsame Vorlage destilliert und anschließend durch Phasentrennung voneinander getrennt werden. In einem solchen Schritt der Lösungsmittelabtrennung zurückgewonnenes organisches Lösungsmittel kann in den Prozess zurückgeführt werden, beispielsweise in die dritte Lösungsmittelphase **(43).** Die beim Verdampfen erhaltene Alkoholfraktion **(22)** wird bevorzugt (gegebenenfalls nach einer Aufreinigung) in den Schritt (B) zurückgeführt und dort als Bestandteil des für die Urethanspaltung eingesetzten Alkohols eingesetzt.

Nach dem Verdampfen verbleibt eine Carbamatphase **(7).** Diese wird in einem Schritt (D.II.a) **(4201** in FIG. 1) mit einer Wasserphase **(53),** insbesondere einer Waschwasserphase, unter Erhalt einer Aminphase (eines Amin-Wasser-Gemisches; **8** in FIG. 1) hydrolysiert. Dabei verbleiben im Allgemeinen aus dem Polyurethanprodukt stammende Verunreinigungen zumindest teilweise in dieser Aminphase **(8).** Die Hydrolyse kann (und wird bevorzugt) in Gegenwart eines Katalysators durchgeführt werden, wobei die gleichen Katalysatoren wie weiter oben für Schritt (B) genannt geeignet sind. Bevorzugt wird die in Schritt (C.II.3.a) erhaltene zweite wässrige Phase **(52)** als Bestandteil (gegebenenfalls als alleiniger Bestandteil) der in Schritt (D.II.a) einzusetzenden Wasserphase verwendet. Wenn in Schritt (C.II.1) die Phasentrennung unter Erhalt der ersten wässrige Phase **(51)** durchgeführt wird, ist es in einer Ausführungsform der Erfindung möglich, diese erste wässrige Phase als Bestandteil (insbesondere in Kombination mit der in Schritt (C.II.3.a) erhaltenen zweiten wässrigen Phase **(52),** gegebenenfalls aber auch als alleiniger Bestandteil) der in Schritt (D.II.a) einzusetzenden Wasserphase (Waschwasserphase; **53)** zu verwenden. Wird Schritt (C.II.1) mehrstufig durchgeführt, so wird im Fall der weiter oben beschriebenen Gegenstromextraktion insbesondere nur die in der ersten Waschstufe erhaltene "erste wässrige Phase" auf diese Weise in Schritt (D.II.a) verwendet. Im Fall der Kreuzstromextraktion können alle "ersten wässrigen Phasen" auf diese Weise in Schritt (D.II.a) verwendet werden.

Grundsätzlich sind jedoch für Schritt (D.II.a) alle üblichen Wasserquellen (z. B. auch Frischwasser oder Dampfkondensat) als Wasserphase **53** einsetzbar.

In der zweiten Variante (Variante b; vgl. auch **FIG. 2****)** geht die Gewinnung der Amine in Schritt (D) von der zweiten Alkoholphase **(23)** aus (da die ursprünglich in der ersten Alkoholphase **(21)** enthaltenden Carbamate bzw. Amine in Schritt (C.II.3.b) in diese überführt wurden). In dieser Variante wird bevorzugt zuerst der Schritt der Hydrolyse (hier Schritt (D.I.b) = **4102** in FIG. 2) und dann erst der Schritt der Verdampfung (hier Schritt (D.II.b) = **4202)** durchgeführt. In der Hydrolyse wird ein Amin-Wasser-Alkohol-Gemisch erhalten. Bezüglich der Durchführung des Schrittes kann auf zuvor im Rahmen der ersten Variante vorgebrachten Erläuterungen verwiesen werden.

Im nächsten Schritt (Schritt (D.II.b) = **4202**) wird das Amin-Wasser-Alkohol-Gemisch **(10)** einem Verdampfungsprozess unterzogen. Dies geschieht bevorzugt zweistufig, wobei in einer ersten Stufe **(4212)** Wasser **(54)** verdampft wird, wobei ein Amin-Alkohol-Gemisch **(11)** verbleibt, und in einer zweiten Stufe **(4222)** eine Alkoholfraktion **(22)** verdampft wird, wobei eine Aminphase **(8)** verbleibt. Auch in dieser Variante kann der Verdampfung (d. h. der Wasserverdampfung) eine Abtrennung gegebenenfalls vorhandenen organischen Lösungsmittels vor- oder nachgeschaltet sein, wobei der Begriff *"vor- oder nachgeschaltet"* auch eine solche Ausgestaltung der Lösungsmittelabtrennung umfasst, bei welcher Wasser und Lösungsmittel in eine gemeinsame Vorlage destilliert und anschließend durch Phasentrennung voneinander getrennt werden. In einem solchen Schritt der Lösungsmittelabtrennung zurückgewonnenes organisches Lösungsmittel kann in den Prozess zurückgeführt werden, beispielsweise in die dritte Lösungsmittelphase. Das abgedampfte Wasser kann ebenfalls in den Prozess zurückgeführt werden, und zwar kann es insbesondere als Bestandteil der in Schritt (D.I.b) eingesetzten Wasserphase eingesetzt werden. Zusätzlich benötigtes Wasser kann aus anderen üblichen Wasserquellen (z. B. Frischwasser oder Dampfkondensat) stammen. Die in der zweiten Verdampfungsstufe erhaltene Alkoholfraktion wird bevorzugt (gegebenenfalls nach einer Aufreinigung) in den Schritt (B) zurückgeführt und dort als Bestandteil des für die Urethanspaltung eingesetzten Alkohols eingesetzt.

Unabhängig von der gewählten Variante wird schließlich aus der in der Hydrolyse (Schritt (D.I.b) bzw. Schritt (D.II.a)) erhaltenen Aminphase **(8)** in einem Schritt (D.III) das Amin **(9)** gewonnen. Je nach Art des Amins umfasst diese Aufarbeitung vorzugsweise eine Phasentrennung und/oder Destillation. Enthält die Aminphase noch substanzielle Anteile an in Schritt (B) eingesetztem Alkohol, so wird dieser im Rahmen des Schritts (D.III) abgetrennt und kann in Schritt (B) zurückgeführt werden.

In einer besonders vorteilhaften Ausführungsform der Erfindung, die einen wirtschaftlichen und umweltschonenden Auslass für aus dem Polyurethanprodukt stammende Verunreinigungen bietet, wird die Gewinnung des Amins aus der Aminphase in die Aufarbeitung neu hergestellten Amins eingebunden, *indem die Aminphase einer Rohproduktfraktion des Amins, die aus der Neuherstellung des Amins stammt, beigemischt wird.*
(1) Diese besonders vorteilhafte Ausführungsform des erfindungsgemäßen Verfahrens ist insbesondere dann anwendbar, wenn die Isocyanatkomponente des Polyurethanprodukts auf genau einer Isocyanatklasse basiert. In einem solchen Fall enthält die im erfindungsgemäßen Verfahren aus dem Polyurethanprodukt gewonnene Aminphase (8) nur die zu den Isocyanaten der Isocyanatklasse korrespondierenden Amine (und keine anderen) und kann daher problemlos mit einer Rohproduktfraktion, die in einem Prozess zur Herstellung (d. h. zur Neuherstellung, zu unterscheiden von der Rückgewinnung durch Recycling) des gleichen Amins (der gleichen Aminklasse) anfällt, beigemischt werden.
(2) In dem Fall, dass die Isocyanatkomponente des Polyurethanprodukts auf Isocyanaten unterschiedlicher Isocyanatklassen basiert, ist die genannte besonders vorteilhafte Ausführungsform des erfindungsgemäßen Verfahrens insbesondere dann anwendbar, wenn sich die zu den Isocyanatklassen korrespondierenden Aminklassen in ihren Siedepunkten derart unterscheiden, dass (genau) eine Aminklasse deutlich niedriger siedet (d. h. um mindestens 20 °C niedriger) als die am niedrigsten siedende sonst noch vorhandene Aminklasse. In einem solchen Fall kann diese Ausführungsform dazu verwendet werden, die am leichtesten siedende Aminklasse im Rahmen der Aufarbeitung neu hergestellten Amins der gleichen Aminklasse wiederzugewinnen, wobei Amine von höher siedenden Aminklassen in der Aufarbeitung abgetrennt werden, indem diese in Sumpffraktionen bzw. in Rückstände (siehe weiter unten für Details) überführt werden. So kann beispielsweise im Fall eines Polyurethanprodukts, das bezüglich seiner Isocyanatkomponente auf einer Mischung aus TDI und MDI basiert, die Aminphase in die Aufarbeitung einer TDA-Rohproduktfraktion eingebunden werden, indem die Aminphase mit einer solchen TDA-Rohproduktfraktion vermischt und zusammen mit dieser aufgearbeitet wird. In dieser Aufarbeitung werden das neu hergestellte TDA und das TDA, welches ursprünglich aus dem Polyurethanprodukt stammt, gemeinsam gewonnen, während das MDA aus dem Polyurethanprodukt in der destilllativen Reinigung als Sumpffraktion abgetrennt wird. Aus dieser Sumpffraktion kann es entweder in einem weiteren Destillationsschritt gewonnen werden (zumindest die Diamine der Diphenylmethanreihe), oder man verzichtet auf die (stoffliche) Wiedergewinnung des MDA und lässt dieses in den festen Rückstand der TDA-Herstellung gelangen (siehe unten für Details).

Die folgende Detailbeschreibung orientiert sich sprachlich der Einfachheit halber an Fall (1), ist jedoch auch auf Fall (2) anwendbar.

In der Herstellung von Aminen, die für die Polyurethansynthese bedeutsam sind, fallen, beispielsweise als Sumpffraktion einer Destillation zur Reinigung des angestrebten Amins oder auch als Rohprodukt der Herstellung selbst (gegebenenfalls nach Abtrennung von Lösungsmittel), regelmäßig Rohproduktfraktionen an, die neben dem gewünschten Amin noch Verunreinigungen bzw. Koppelprodukte (wie zum Beispiel höher als das Amin siedende organische Verunreinigungen (sog. Hochsieder), leichter als das Amin siedende organische Verunreinigungen (sog. Leichtsieder) und/oder (Reaktions-)Wasser) enthalten. In dieser besonders bevorzugten Ausführungsform der Erfindung unter Einbindung der Gewinnung des Amins aus der Aminphase in die Aufarbeitung neu hergestellten Amins wird daher eine solche (in der Aminherstellung ohnehin anfallende) Rohproduktfraktion in einem Schritt (E) bereitgestellt und in einem *Schritt (D.III.1)* mit der Aminphase aus Schritt (D.III) vermischt, woran sich die Aufarbeitung zur Gewinnung des Amins anschließt.

Solche in Schritt (E) bereitgestellte *Rohproduktfraktionen* werden insbesondere wie folgt erhalten:
(E.I) Katalytische (bspw. in Gegenwart von Raney-Nickel-Katalysatoren) Hydrierung der zu dem Amin korrespondierenden Nitroverbindung (beispielsweise Hydrierung von Dinitrotoluol zu Toluylendiamin), gegebenenfalls in Gegenwart eines Lösungsmittels (beispielsweise Methanol), unter Erhalt, gegebenenfalls nach Abtrennung eingesetzten Lösungsmittels, *einer Rohproduktfraktion (als Rohprodukt der Hydrierung), die neben dem Amin noch Hoch- und Leichtsieder sowie Wasser enthält;*
(E.II) Abtrennen von Wasser aus diesem Rohprodukt unter Erhalt eines von Wasser (weitgehend) befreiten Verfahrensprodukts;
(E.III) Destillatives Reinigen des von Wasser (weitgehend) befreiten Verfahrensprodukts unter Erhalt einer Destillatfraktion des gewünschten Amins und einer *Rohproduktfraktion (als Sumpffraktion der Destillation) enthaltend höher als das Amin siedende organische Verunreinigungen sowie weitere Anteile des gewünschten Amins.*

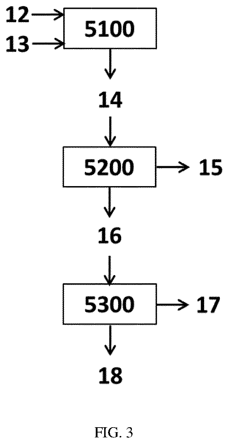

Die Schritte (E.I) bis (E.III) sind in **FIG. 3** schematisch dargestellt. Es bedeuten:
**12:** Zur Hydrierung eingesetzter Wasserstoff;
**13:** zu dem Amin korrespondierende Nitroverbindung;
**14:** Rohprodukt der Hydrierung;
**15:** abgetrenntes Wasser;
**16:** an Wasser abgereichertes Verfahrensprodukt;
**17:** Destillatfraktion des in der Hydrierung gebildeten Amins;
**18:** Sumpffraktion der Destillation;
**5100:** Hydrierung (Schritt (E.I)); **5200**: Wasserabtrennung (Schritt (E.II); **5300**: Destillation (Schritt (E.III)).

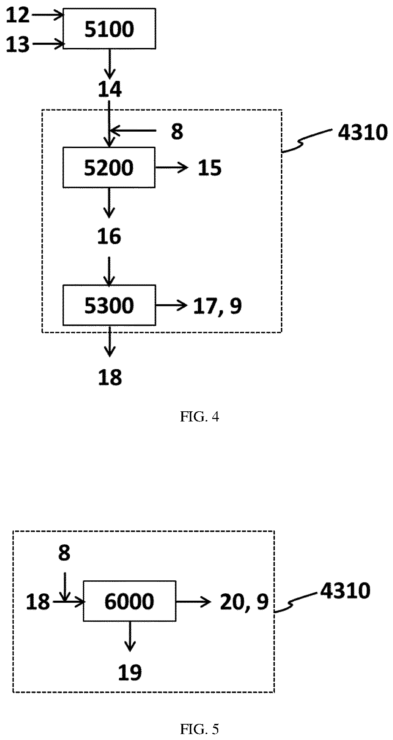

In einer Ausführungsform der Erfindung wird die Aminphase (8) mit dem in Schritt (E.I) erhaltenen *Rohprodukt der Hydrierung (14)* (das lediglich von gegebenenfalls vorhandenem Lösungsmittel befreit wurde), vermischt d. h. die Rohproduktfration aus Schritt (E) wird als Rohprodukt der Hydrierung (*Schritt E.I) = **5100***) erhalten. Das Polyurethanprodukt stammende Amin **(9)** wird hier gemeinsam mit dem aus der (Neu-)Herstellung stammenden Amin **(17)** abdestilliert. Dies ist in **FIG. 4** gezeigt, worin bereits verwendete Bezugszeichen die gleiche Bedeutung haben wie zuvor und **4310** für den Schritt (D.III.1) steht.

In dieser Ausführungsform wird die Aminphase **(8)** dem Rohprodukt der Hydrierung aus Schritt (E.I) insbesondere vor oder im Schritt der Wasserabtrennung (*Schritt E.II)*) beigemischt, wobei die Wasserabtrennung bevorzugt destillativ erfolgt, beispielsweise wie in EP 0 236 839 A2 beschrieben. In dieser Ausführungsform enthält also die Rohproduktfraktion des zu dem Isocyanat korrespondierenden Amins neben dem Amin zusätzlich noch leichter als das Amin siedende organische Verunreinigungen sowie Wasser und wird einer Destillation zur Abtrennung von Wasser zugeführt. In dieser Destillation werden eine Sumpffraktion enthaltend das Amin, leichter als das Amin siedende organische Verunreinigungen und höher als das Amin siedende organische Verunreinigungen sowie eine Kopffraktion enthaltend abgetrenntes Wasser (gegebenenfalls neben Restmengen leichter als das Amin siedender organischer Verunreinigungen) erhalten. Die aus dem Polyurethanprodukt stammenden Verunreinigungen gelangen im Schritt der Wasserabtrennung - Schritt (E.II) - in die Sumpffraktion. Im Folgeschritt der Amindestillation - Schritt (E.III) - gelangen sie ebenfalls in die Sumpffraktion.

In einer weiteren Ausführungsform der Erfindung wird die Aminphase **(8)** der in Schritt (E.III) erhaltenen Sumpffraktion **(18)** beigemischt, d. h. die Rohproduktfration aus Schritt (E) wird als Sumpffraktion der Amindestillation (*Schritt E.III) = **5300***) erhalten. Beispiele für solche als Sumpffraktionen der Amindestillation erhaltene Rohproduktfraktionen sind die Ströme 5, 50 bzw. 51 der Abbildungen FIG. 1 bis 3 der internationalen Patentanmeldung WO 02/48075 A1, wobei die weitere Aufarbeitung dieser Ströme so erfolgen kann, wie in der Schrift geschildert oder aber auch abweichend davon in Trockenapparaten wie nachfolgend geschildert. Ein weiteres Beispiel für solche Rohproduktfraktionen ist der Strom P4 der Abbildungen FIG. 1 bis FIG. 5 der US-Patentschrift US 7,307,190 B2. Derartige Sumpffraktion werden im Stand der Technik aufgearbeitet, um darin enthaltenes Amin zurückzugewinnen. Hierzu wird die Sumpffraktion in Trocknungsapparaten zu einem festen Rückstand aufkonzentriert, wobei Amin abdestilliert und so zurückgewonnen werden kann. In der genannten Ausführungsform des erfindungsgemäßen Verfahrens wird nun durch Vermischung der Aminphase **(8)** mit der Sumpffraktion **(18)** die Zurückgewinnung von *Amin, das aus der (Neu-)Herstellung des Amins stammt **(20)*** mit der Gewinnung des *Amins, das aus dem Polyurethanprodukt stammt **(9)*** verbunden. Dabei werden also neben dem Amin **(20, 9)** ein fester Rückstand enthaltend die in der Rohproduktfraktion vorhandenen Hochsieder *und die aus dem Polyurethanprodukt stammenden Verunreinigungen* erhalten. Dies ist in **FIG. 5** gezeigt, worin bereits verwendete Bezugszeichen die gleiche Bedeutung haben wie zuvor und **6000** für die Rückstandsaufarbeitung steht. Für eine solche Aufarbeitung geeignete Apparate sind dem Fachmann bekannt und beispielsweise in den Patentanmeldungen DE 10 2012 108 261 Al (Knetertrockner, auch in US 3,307,190 B2 zur Aufarbeitung des Stroms P4 erwähnt), EP 2 540 702 A2 (Wirbelbett-Trockner) und WO 2018/114846 A1 (verschiedene Trocknertypen) beschrieben. (In den genannten DE-, EP- und WO-Schriften wird die Aufarbeitung von TDI-Rückständen beschrieben; die Apparate sind aber auch für die Aufarbeitung von TDA-Rückständen einsetzbar.) Die in einem solchen Aufarbeitungsprozess erhaltenen festen Rückstände können wie bisher weiter verarbeitet werden; sie können z. B. verbrannt, vergast (also im Gegensatz zur Verbrennung unter *Sauerstoffunterschuss* erhitzt) oder pyrolysiert werden.

Mit der zuvor geschilderten besonders vorteilhaften Ausführungsform der Erfindung gelingt es also, Verunreinigungen aus dem Polyurethanprodukt *in einen ohnehin anfallenden* Rückstand zu überführen, sodass zusätzliche Abfallströme vermindert oder vermieden werden.

### Beispiel:

### Analytik:

Die Zusammensetzungen von Stoffgemischen wurden mittels H-NMR/2D-NMR-Spektroskopie mit internem Standard ermittelt. Prozentangaben zur Zusammensetzung von Stoffgemischen sind Massenanteile bezogen auf die Gesamtmasse des jeweiligen Stoffgemisches.

### Versuche:

Ein TDI-basierter Polyurethanschaum wurde einer Alkoholoyse mit Diethylenglykol (DEG) im Massenverhältnis 1 : 1 unterzogen **(Schritte (A) und (B)** des erfindungsgemäßen Verfahrens). Das so erhaltene erste Produktgemisch wies folgende Zusammensetzung auf (Massenanteile bezogen auf die Gesamtmasse des ersten Produktgemisches).

### Erstes Produktgemisch:

38 % Polyol, 42 % DEG und in Summe 20 % TDA und Carbamate.

70 g dieses ersten Produktgemisches wurden in eine Probeflasche gefüllt und 160 g Toluol hinzugegeben. Die Flasche wurde verschlossen und 5 min mit der Hand geschüttelt **(Extraktion** gemäß **Schritt (C.I)** des erfindungsgemäßen Verfahrens). Das erhaltene Produktgemisch war zweiphasig. Die obere, leichte Phase enthielt primär Polyol und Toluol (erste Lösungsmittelphase), die untere, schwere Phase enthielt primär DEG, Amine bzw. Carbamatverbindungen (Alkoholphase aus Schritt (C.I) = erste Alkoholphase). Beide Phasen wurden im Scheidetrichter voneinander getrennt. Es wurden ca. 145 g Lösungsmittelphase und ca. 76 g Alkoholphase erhalten. Die Phasen wiesen nachfolgende Zusammensetzungen auf.

### Leichte Phase (erste Lösungsmittelphase):

11 % Polyol, 85 % Toluol, 3 % DEG, Rest TDA und Carbamate.

### Schwere Phase (erste Alkoholphase):

4 % Polyol, 36 % Toluol, 45 % DEG, Rest TDA und Carbamate.

120 g der ersten Lösungsmittelphase wurden in eine Probeflasche überführt und 120 g vollentsalztes Wasser (VE-Wasser) hinzugegeben. Die Flasche wurde verschlossen und 5 min mit der Hand geschüttelt. Es wurden eine leichte Phase von ca. 70 g (zweite Lösungsmittelphase) und eine schwere Phase von ca. 165 g (Emulsionsphase) voneinander getrennt **(Wäsche** gemäß **Schritt (C.II.1)** des erfindungsgemäßen Verfahrens). Die leichte Phase wies die nachfolgende Zusammensetzung auf:

### Leichte Phase (zweite Lösungsmittelphase):

11 % Polyol, 85 % Toluol, ca. 2,7 % Wasser, 0,2 % DEG, Rest TDA und Carbamate.

Die zweite Lösungsmittelphase wurde in einem Prinzipversuch mittels Rotationsverdampfer auf 150 °C bei 30 mbar erhitzt und dabei von großen Teilen des Lösungsmittels befreit. Folgende Zusammensetzung wurde für das zurückbleibende rohe Polyol ermittelt.

### Rohes Polyol:

93 % Polyol, 0,3 % Toluol, ca. 0,2 % Wasser, 4 % DEG, Rest TDA und Carbamate.

Eine Abtrennung störender Komponenten (insbesondere TDA und Carbamate) ist mit dem Methoden der Destillationstechnik ohne weiteres möglich **(Schritt (C.II.2))**.

Die Emulsionsphase wurde in einer Probeflasche mit der ersten Alkoholphase (aus Schritt (C.I)) vermischt, und zu 50 g des resultierenden Gemisches wurden 150 g Toluol zugegeben. Die Probeflasche wurde verschlossen, und es wurde 5 min von Hand geschüttelt (Extraktion der Emulsionsphase zum Zweck der Brechung der Emulsion gemäß **Schritt (C.II.3.b)** wie in FIG. 2 gezeigt). Nach einer kurzen Trennzeit von weniger als 2 min lagen zwei sauber getrennte Phasen ohne Emulsion vor, die leicht voneinander getrennt werden konnten. Die so erhaltenen Phasen wiesen folgende Zusammensetzungen auf.

### Leichte Phase (dritte Lösungsmittelphase):

0,4 % Polyol, 98,2 % Toluol, ca. 1 % Wasser, 0,1 % DEG, Rest TDA und Carbamate.

### Schwere Phase (zweite Alkoholphase):

0,6 % Polyol, 4 % Toluol, ca. 48 % Wasser, 37 % DEG, Rest TDA und Carbamate.

## Patentansprüche

1. Verfahren zur Wiedergewinnung von Rohstoffen aus Polyurethanprodukten, umfassend die Schritte:
(A) Bereitstellen eines auf einer Isocyanatkomponente und einer Polyolkomponente basierenden Polyurethanprodukts;
(B) Umsetzen des Polyurethanprodukts mit einem Alkohol in Gegenwart eines Katalysators, wobei ein erstes Produktgemisch enthaltend nicht umgesetzten Alkohol, Polyole und Carbamate sowie gegebenenfalls Wasser erhalten wird;
(C) Aufarbeiten des ersten Produktgemisches, umfassend:
(C.I) Vermengen des in Schritt (B) erhaltenen ersten Produktgemisches ohne vorherige Abtrennung gegebenenfalls in dem ersten Produktgemisch vorhandenen Wassers mit einem organischen Lösungsmittel, das mit dem in Schritt (B) eingesetzten Alkohol nicht vollständig mischbar ist, und Phasentrennung in eine erste Alkoholphase und eine erste Lösungsmittelphase;
(C.II) Aufarbeiten der ersten Lösungsmittelphase unter Gewinnung der Polyole;
und optional
(D) Aufarbeiten der ersten Alkoholphase umfassend einen Schritt des Hydrolysierens der Carbamate.

2. Verfahren nach Anspruch 1, bei welchem Schritt (C.II) Folgendes umfasst:
(C.II.1) Waschen der ersten Lösungsmittelphase mit einer wässrigen Waschflüssigkeit und Phasentrennung in eine zweite Lösungsmittelphase, eine Emulsionsphase und optional eine erste wässrige Phase;
(C.II.2) Aufarbeiten der zweiten Lösungsmittelphase unter Gewinnung der Polyole.

3. Verfahren nach Anspruch 2, bei welchem Schritt (C.II) weiterhin umfasst:
(C.II.3) Vermengen der Emulsionsphase
(C.II.3.a) mit organischem Lösungsmittel und Phasentrennung in eine dritte Lösungsmittelphase und eine zweite wässrige Phase, oder
(C.II.3.b) mit der ersten Alkoholphase und mit organischem Lösungsmittel und Phasentrennung in eine dritte Lösungsmittelphase und eine zweite Alkoholphase;
und
(C.II.4) Zurückführen der dritten Lösungsmittelphase nach Schritt (C.I) oder Schritt (C.II.1).

4. Verfahren nach Anspruch 3, umfassend den Schritt (C.II.3.a) und den Schritt (D), welcher die folgenden Schritte umfasst:
(D.I.a) Verdampfen einer Alkoholfraktion aus der ersten Alkoholphase unter Verbleib einer Carbamatphase;
(D.II.a) Hydrolysieren der Carbamatphase mit einer Wasserphase unter Erhalt einer Aminphase;
(D.III) Gewinnen eines Amins, das zu einem Isocyanat der Isocyanatkomponente korrespondiert, aus der Aminphase.

5. Verfahren nach Anspruch 3, umfassend den Schritt (C.II.3.b) und den Schritt (D), welcher die folgenden Schritte umfasst:
(D.I.b) Hydrolysieren der zweiten Alkoholphase mit einer Wasserphase unter Erhalt eines Amin-Wasser-Alkohol-Gemisches;
(D.II.b) Verdampfen von Wasser aus dem Amin-Wasser-Alkohol-Gemisch unter Erhalt eines Amin-Alkohol-Gemisches gefolgt von Verdampfen einer Alkoholfraktion aus dem Amin-Alkohol-Gemisch unter Verbleib einer Aminphase;
(D.III) Gewinnen eines Amins, das zu einem Isocyanat der Isocyanatkomponente korrespondiert, aus der Aminphase.

6. Verfahren nach Anspruch 4, bei welchem die in Schritt (D.II.a) eingesetzte Wasserphase die in Schritt (C.II.3.a) erhaltene zweite wässrige Phase umfasst.

7. Verfahren nach einem der Ansprüche 4 bis 6, bei welchem in Schritt (C.II.1) die Phasentrennung unter Erhalt der ersten wässrige Phase durchgeführt wird und die in Schritt (D.II.a) bzw. in Schritt (D.I.b) eingesetzte Wasserphase diese erste wässrige Phase umfasst.

8. Verfahren nach einem der Ansprüche 4 bis 7, bei welchem die in Schritt (D.I.a) bzw. in Schritt (D.II.b) erhaltene Alkoholfraktion nach Schritt (B) zurückgeführt wird.

9. Verfahren nach einem der Ansprüche 4 bis 8, weiterhin umfassend den Schritt
(E) Bereitstellen einer Rohproduktfraktion eines Amins, das das gleiche Amin ist, das in Schritt (D.III) gewonnen wird, wobei die Rohproduktfraktion neben diesem Amin höher als dieses Amin siedende organische Verunreinigungen enthält;
wobei Schritt (D.III) umfasst:
(D.III.1) Vermischen der Aminphase mit der Rohproduktfraktion und Aufarbeiten der erhaltenen Mischung unter Erhalt des in der Rohproduktfraktion enthaltenen Amins gemeinsam mit dem aus der Aminphase gewonnenen Amin.

10. Verfahren nach Anspruch 9, bei welchem die Rohproduktfraktion einer Sumpffraktion einer Destillation zur Reinigung des in der Rohproduktfraktion enthaltenen Amins entnommen wird, wobei in Schritt (D.III.1) zusätzlich ein fester Rückstand enthaltend die höher als dieses Amin siedenden organischen Verunreinigungen erhalten wird,
oder
bei welchem die Rohproduktfraktion dem Rohprodukt eines Verfahrens zur Herstellung des in der Rohproduktfraktion enthaltenen Amins entnommen wird und neben den höher als dieses Amin siedenden organischen Verunreinigungen noch leichter als dieses Amin siedende organische Verunreinigungen sowie Wasser enthält und einer Destillation zur Abtrennung von Wasser zugeführt wird, in welcher eine Sumpffraktion enthaltend dieses Amin, leichter als dieses Amin siedende organische Verunreinigungen und höher als dieses Amin siedende organische Verunreinigungen sowie eine Kopffraktion enthaltend abgetrenntes Wasser erhalten werden.

11. Verfahren nach Anspruch 10, bei welchem Schritt (E) umfasst:
(E.I) Katalytische Hydrierung der zu dem in der Rohproduktfraktion enthaltenen Amin korrespondierenden Nitroverbindung unter Erhalt eines Rohprodukts enthaltend neben diesem Amin noch höher als dieses Amin siedende organische Verunreinigungen, leichter als dieses Amin siedende organische Verunreinigungen und Wasser;
(E.II) Abtrennen von Wasser aus dem Rohprodukt unter Erhalt eines an Wasser abgereicherten Verfahrensprodukts;
(E.II) Destillation des an Wasser abgereicherten Verfahrensprodukts unter Erhalt einer Destillatfraktion des in der Rohproduktfraktion enthaltenen Amins und einer Sumpffraktion enthaltend höher als dieses Amin siedende organische Verunreinigungen.

12. Verfahren nach einem der vorstehenden Ansprüche, bei welchem in Schritt (C.I)
das organische Lösungsmittel ausgewählt wird aus der Gruppe bestehend aus aliphatischen Kohlenwasserstoffen, alicyclischen Kohlenwasserstoffen, aromatischen Kohlenwasserstoffen und Mischungen von zwei oder mehr der vorgenannten organischen Lösungsmittel, und
der Alkohol ausgewählt wird aus der Gruppe bestehend aus Methanol, Ethanol, Ethylenglykol, Diethylenglykol, Propylenglykol, Dipropylenglykol, Methylglykol, Triethylenglykol, Glycerin, 2-Methyl-1,3-Propandiol und Mischungen von zwei oder mehr der vorgenannten Alkohole.

13. Verfahren nach einem der vorstehenden Ansprüche, bei welchem der Katalysator in Schritt (B) ausgewählt ist aus der Gruppe bestehend aus Alkalimetall-Hydroxiden, Erdalkalimetallhydroxiden, Alkalimetallsalzen von Carbonsäuren, Erdalkalimetallsalzen von Carbonsäuren, Lewis-Säuren, organischen Aminen, organometallischen Verbindungen und Zinnverbindungen.

14. Verfahren nach einem der vorstehenden Ansprüche, bei welchem das Polyurethanprodukt ein Polyurethanschaum, ein Polyurethanelastomer, ein Polyurethanklebstoff oder eine Polyurethanbeschichtung ist.

15. Verfahren nach einem der vorstehenden Ansprüche, bei welchem Wasser in Schritt (B) allenfalls in einer solchen Menge zugeführt wird, dass der Massenanteil an Wasser, bezogen auf die Gesamtmasse aus in Schritt (B) vorhandenem Polyurethanprodukt, Katalysator, Alkohol und Wasser, in einem Bereich von 0 % bis 5,0 % liegt, wobei während der Umsetzung des Polyurethanprodukts mit dem Alkohol in Gegenwart des Katalysators kein weiteres Wasser zugegeben wird.

## Claims

1. Method for recovering raw materials from polyurethane products, comprising the steps of :
(A) providing a polyurethane product based on an isocyanate component and a polyol component;
(B) reacting the polyurethane product with an alcohol in the presence of a catalyst, to give a first product mixture containing unreacted alcohol, polyols and carbamates and also optionally water;
(C) working up the first product mixture, comprising:
(C.I) combining the first product mixture obtained in step (B), without prior removal of any water present in the first product mixture, with an organic solvent which is not fully miscible with the alcohol used in step (B), and performing phase separation into a first alcohol phase and a first solvent phase;
(C.II) working up the first solvent phase to recover the polyols;
and optionally
(D) working up the first alcohol phase, comprising a step of hydrolyzing the carbamates.

2. Method according to Claim 1, in which step (C.II) comprises the following:
(C.II.1)washing the first solvent phase with an aqueous washing liquid and performing phase separation into a second solvent phase, an emulsion phase and optionally a first aqueous phase;
(C.II.2)working up the second solvent phase to recover the polyols.

3. Method according to Claim 2, in which step (C.II) further comprises:
(C.II.3)combining the emulsion phase
(C.II.3.a) with organic solvent and performing phase separation into a third solvent phase and a second aqueous phase, or
(C.II.3.b) with the first alcohol phase and with organic solvent and performing phase separation into a third solvent phase and a second alcohol phase;
and
(C.II.4)returning the third solvent phase to step (C.I) or step (C.II.1).

4. Method according to Claim 3, comprising step (C.II.3.a) and step (D), which comprises the following steps:
(D.I.a) evaporating an alcohol fraction from the first alcohol phase, to leave a carbamate phase;
(D.II.a) hydrolyzing the carbamate phase with a water phase, to give an amine phase;
(D.III) recovering an amine which corresponds to an isocyanate of the isocyanate component from the amine phase.

5. Method according to Claim 3, comprising step (C.II.3.b) and step (D), which comprises the following steps:
(D.I.b) hydrolyzing the second alcohol phase with a water phase, to give an amine-water-alcohol mixture;
(D.II.b) evaporating water from the amine-water-alcohol mixture, to give an amine-alcohol mixture, followed by evaporating an alcohol fraction from the amine-alcohol mixture, to leave an amine phase;
(D.III) recovering an amine which corresponds to an isocyanate of the isocyanate component from the amine phase.

6. Method according to Claim 4, in which the water phase used in step (D.II.a) comprises the second aqueous phase obtained in step (C.II.3.a).

7. Method according to any of Claims 4 to 6, in which in step (C.II.1) the phase separation is carried out to give the first aqueous phase, and the water phase used in step (D.II.a) or in step (D.I.b) comprises this first aqueous phase.

8. Method according to any of Claims 4 to 7, in which the alcohol fraction obtained in step (D.I.a) or in step (D.II.b) is returned to step (B).

9. Method according to any of Claims 4 to 8, further comprising the step of
(E) providing a crude product fraction of an amine, which is the same amine which is recovered in step (D.III), where the crude product fraction comprises this amine plus organic impurities boiling at a higher point than this amine;
where step (D.III) comprises:
(D.III.1) mixing the amine phase with the crude product fraction and working up the resulting mixture, to give the amine present in the crude product fraction together with the amine recovered from the amine phase.

10. Method according to Claim 9, in which the crude product fraction is taken from a bottom fraction of a distillation for purifying the amine present in the crude product fraction, where in step (D.III.1) additionally a solid residue is obtained which comprises the organic impurities boiling at a higher point than this amine,
or
in which the crude product fraction is taken from the crude product of a process for preparing the amine present in the crude product fraction, and comprises the organic impurities boiling at a higher point than this amine plus organic impurities boiling more readily than this amine, and also water, and is supplied to a distillation for removing water, in which a bottom fraction this amine, organic impurities boiling more readily than this amine and organic impurities boiling at a higher point than this amine, and also a top fraction comprising water removed are obtained.

11. Method according to Claim 10, in which step (E) comprises:
(E.I) catalytically hydrogenating the nitro compound corresponding to the amine present in the crude product fraction, to give a crude product comprising this amine plus organic impurities boiling at a higher point than this amine, organic impurities boiling more readily than this amine, and water;
(E.II) removing water from the crude product, to give a water-depleted method product;
(E.II) distilling the water-depleted method product, to give a distillate fraction of the amine present in the crude product fraction, and a bottom fraction containing organic impurities boiling at a higher point than this amine.

12. Method according to any of the preceding claims, in which in step (C.I)
the organic solvent is selected from the group consisting of aliphatic hydrocarbons, alicyclic hydrocarbons, aromatic hydrocarbons, and mixtures of two or more of the aforesaid organic solvents, and
the alcohol is selected from the group consisting of methanol, ethanol, ethylene glycol, diethylene glycol, propylene glycol, dipropylene glycol, methyl glycol, triethylene glycol, glycerol, 2-methyl-1,3-propanediol, and mixtures of two or more of the aforesaid alcohols.

13. Method according to any of the preceding claims, in which the catalyst in step (B) is selected from the group consisting of alkali metal hydroxides, alkaline earth metal hydroxides, alkali metal salts of carboxylic acids, alkaline earth metal salts of carboxylic acids, Lewis acids, organic amines, organometallic compounds, and tin compounds.

14. Method according to any of the preceding claims, in which the polyurethane product is a polyurethane foam, a polyurethane elastomer, a polyurethane adhesive or a polyurethane coating.

15. Method according to any of the preceding claims, in which water is supplied in step (B), if at all, in an amount such that the mass fraction of water, based on the total mass of polyurethane product, catalyst, alcohol and water present in step (B), is in a range from 0% to 5.0%, with no further water being added during the reaction of the polyurethane product with the alcohol in the presence of the catalyst.

## Revendications

1. Procédé de récupération de matières premières à partir de produits polyuréthane, comprenant les étapes :
(A) mise à disposition d'un produit polyuréthane à base d'un composant isocyanate et d'un composant polyol ;
(B) mise en réaction du produit polyuréthane avec un alcool en présence d'un catalyseur, avec obtention d'un premier mélange de produits contenant un alcool n'ayant pas réagi, des polyols et des carbamates ainsi que, le cas échéant, de l'eau ;
(C) traitement du premier mélange de produits, comprenant :
(C.I) mélange du premier mélange de produits obtenu dans l'étape (B), sans séparation préalable de l'eau éventuellement présente dans le premier mélange de produits, avec un solvant organique qui n'est pas totalement miscible à l'alcool utilisé dans l'étape (B), et séparation des phases en une première phase d'alcool et une première phase de solvant ;
(C.II) traitement final de la première phase de solvant avec obtention des polyols ;
et éventuellement
(D) traitement de la première phase d'alcool comprenant une étape de l'hydrolyse des carbamates.

2. Procédé selon la revendication 1, dans lequel l'étape (C.II) comprend ce qui suit :
(C.II.1) lavage de la première phase de solvant avec un liquide de lavage aqueux et séparation des phases en une deuxième phase de solvant, une phase d'émulsion et, éventuellement, une première phase aqueuse ;
(C.II.2) traitement de la deuxième phase de solvant avec obtention des polyols ;

3. Procédé selon la revendication 2, dans lequel l'étape (C.II) comprend en outre :
(C.II.3) mélange de la phase d'émulsion
(C.II.3.a) avec un solvant organique et séparation des phases en une troisième phase de solvant et en une seconde phase aqueuse, ou
(C.II.3.b) avec la première phase d'alcool et avec un solvant organique et séparation des phases en une troisième phase de solvant et en une seconde phase d'alcool ;
et
(C.II.4) renvoi de la troisième phase de solvant à l'étape (C.I) ou à l'étape (C.II.1).

4. Procédé selon la revendication 3, comprenant l'étape (C.II.3.a) et l'étape (D), qui comprend les étapes suivantes :
(D.I.a) évaporation d'une fraction d'alcool à partir de la première phase d'alcool en laissant une phase de carbamate ;
(D.II.a) hydrolyse de la phase de carbamate avec une phase aqueuse avec obtention d'une phase d'amine ;
(D.III) obtention d'une amine qui correspond à un isocyanate du composant isocyanate, à partir de la phase d'amine.

5. Procédé selon la revendication 3, comprenant l'étape (C.II.3.b) et l'étape (D), qui comprend les étapes suivantes :
(D.I.b) hydrolyse de la seconde phase d'alcool avec une phase aqueuse avec obtention d'un mélange d'amine-eau-alcool ;
(D.II.b) évaporation de l'eau du mélange d'amine-eau-alcool avec obtention d'un mélange d'amine-alcool, suivie de l'évaporation d'une fraction d'alcool du mélange d'amine-alcool, pour laisser une phase d'amine ;
(D.III) obtention d'une amine qui correspond à un isocyanate du composant isocyanate, à partir de la phase d'amine.

6. Procédé selon la revendication 4, dans lequel la phase aqueuse mise en œuvre dans l'étape (D.II.a) comprend la seconde phase aqueuse obtenue dans l'étape (C.II.3.a).

7. Procédé selon l'une des revendications 4 à 6, dans lequel, dans l'étape (C.II.1), la séparation des phases est réalisée avec obtention de la première phase aqueuse et la phase aqueuse mise en œuvre dans l'étape (D.II.a) ou dans l'étape (D.I.b) comprend cette première phase aqueuse.

8. Procédé selon l'une des revendications 4 à 7, dans lequel la fraction d'alcool obtenue dans l'étape (D.I.a) ou dans l'étape (D.II.b) est renvoyée à l'étape (B).

9. Procédé selon l'une des revendications 4 à 8, comprenant en outre l'étape
(E) mise à disposition d'une fraction de produit brut d'une amine, qui est la même amine que celle obtenue dans l'étape (D.III), la fraction de produit brut contenant, outre cette amine, des impuretés organiques présentant un point d'ébullition supérieur à celui de cette amine ;
l'étape (D.III) comprenant :
(D.III.1) mélange de la phase d'amine avec la fraction de produit brut et traitement final du mélange obtenu avec obtention de l'amine contenue dans la fraction de produit brut conjointement avec l'amine obtenue à partir de la phase d'amine.

10. Procédé selon la revendication 9, dans lequel la fraction de produit brut est prélevée d'une fraction de pied d'une distillation pour la purification de l'amine contenue dans la fraction de produit brut, un résidu solide contenant les impuretés organiques présentant un point d'ébullition supérieur à celui de cette amine étant en outre obtenu dans l'étape (D.III.1),
ou
dans lequel la fraction de produit brut est prélevée du produit brut d'un procédé de préparation de l'amine contenue dans la fraction de produit brut et contient, outre les impuretés organiques présentant un point d'ébullition supérieur à celui de cette amine, des impuretés organiques dont le point d'ébullition est inférieur à celui de cette amine ainsi que de l'eau, et est soumise à une distillation pour séparer l'eau, dans laquelle on obtient une fraction de pied contenant cette amine, des impuretés organiques présentant un point d'ébullition inférieur à celui de cette amine et des impuretés organiques présentant un point d'ébullition supérieur à celui de cette amine, ainsi qu'une fraction de tête contenant de l'eau séparée.

11. Procédé selon la revendication 10, dans lequel l'étape (E) comprend :
(E.I) hydrogénation catalytique du composé nitro correspondant à l'amine contenue dans la fraction de produit brut, avec obtention d'un produit brut contenant, outre cette amine, des impuretés organiques présentant un point d'ébullition encore supérieur à celui de cette amine, des impuretés organiques présentant un point d'ébullition inférieur à celui de cette amine et de l'eau ;
(E.II) séparation de l'eau à partir du produit brut avec obtention d'un produit de procédé appauvri en eau ;
(E.II) distillation du produit de procédé appauvri en eau avec obtention d'une fraction de distillat de l'amine contenue dans la fraction de produit brut et d'une fraction de pied contenant des impuretés organiques présentant un point d'ébullition supérieur à celui de cette amine.

12. Procédé selon l'une des revendications précédentes, dans lequel dans l'étape (C.I)
le solvant organique est choisi dans le groupe constitué des hydrocarbures aliphatiques, des hydrocarbures alicycliques, des hydrocarbures aromatiques et des mélanges de deux ou plus de deux des solvants organiques susmentionnés, et
l'alcool est choisi dans le groupe constitué du méthanol, de l'éthanol, de l'éthylèneglycol, du diéthylèneglycol, du propylèneglycol, du dipropylèneglycol, du méthylglycol, du triéthylèneglycol, du glycérol, du 2-méthyl-1,3-propanediol et des mélanges de deux ou plus de deux des alcools susmentionnés.

13. Procédé selon l'une des revendications précédentes, dans lequel le catalyseur de l'étape (B) est choisi dans le groupe constitué des hydroxydes de métaux alcalins, des hydroxydes de métaux alcalino-terreux, des sels de métaux alcalins d'acides carboxyliques, des sels de métaux alcalino-terreux d'acides carboxyliques, des acides de Lewis, des amines organiques, des composés organométalliques et des composés d'étain.

14. Procédé selon l'une des revendications précédentes, dans lequel le produit polyuréthane est une mousse de polyuréthane, un élastomère de polyuréthane, un adhésif de polyuréthane ou un revêtement de polyuréthane.

15. Procédé selon l'une des revendications précédentes, dans lequel de l'eau est éventuellement introduite dans l'étape (B) en une quantité telle que la proportion massique d'eau, par rapport à la masse totale du produit polyuréthane, du catalyseur, de l'alcool et de l'eau présents dans l'étape (B), se situe dans une plage de 0 % à 5,0 %, aucune eau supplémentaire n'étant ajoutée pendant la réaction du produit polyuréthane avec l'alcool en présence du catalyseur.
